(19) **Europäisches Patentamt**

**European Patent Office**

**Office européen des brevets**

(11) **EP 1 235 392 A1**

(12) **EUROPEAN PATENT APPLICATION**
published in accordance with Art. 158(3) EPC

(43) Date of publication:
28.08.2002 Bulletin 2002/35

(51) Int Cl.7: **H04L 12/56**

(21) Application number: **01955688.5**

(86) International application number:
**PCT/JP01/06959**

(22) Date of filing: **10.08.2001**

(87) International publication number:
**WO 02/025878 (28.03.2002 Gazette 2002/12)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **22.09.2000 JP 2000288348**
**08.12.2000 JP 2000374857**
**26.02.2001 JP 2001051037**

(71) Applicant: **MATSUSHITA ELECTRIC INDUSTRIAL CO., LTD.**
**Kadoma-shi, Osaka 571-8501 (JP)**

(72) Inventors:
• **ITOH, Tomoaki**
**Hirakata-shi, Osaka 573-0165 (JP)**
• **YAMAGUCHI, Takao**
**Seika-cho, Soraku-gun, Kyoto 619-0237 (JP)**
• **SATO, Junichi**
**Nara-shi, Nara 631-0801 (JP)**
• **ARAKAWA, Hiroshi**
**Kyoto-shi, Kyoto 612-8136 (JP)**

(74) Representative: **Grünecker, Kinkeldey,**
**Stockmair & Schwanhäusser Anwaltssozietät**
**Maximilianstrasse 58**
**80538 München (DE)**

(54) **DATA TRANSMITTING/RECEIVING METHOD, TRANSMITTING DEVICE, RECEIVING DEVICE, TRANSMITTING/RECEIVING SYSTEM, AND PROGRAM**

(57) In a sending terminal (10), a propagation delay measurement portion (102) uses propagation delay time measurement packets to measure the round trip time to/from an intermediate node of intermediate nodes (12, 13, 14) with the potential of becoming a bottleneck. Based on the results of this measurement, a transmission rate determining portion (104) determines the transmission rate of the data, and a data sending portion (100) sends the data at the determined transmission rate.

FIG. 1

**Description**

TECHNICAL FIELD

The present invention relates to a data sending/receiving method, a sending device, a receiving device, a sending/receiving system, and a program for the sending and receiving of data using the Internet, for example, in an environment with a combination of wired and wireless sections and very large variations in bandwidth.

BACKGROUND ART

In IP (Internet Protocol) networks, such as intranets and the Internet, there are large differences in the usable bandwidth, ranging from several Kbps to several hundred Mbps, depending the connection scheme. Moreover, the effect of other flows can cause temporal variations in the usable bandwidth. To provide stable communications quality over these networks, the largest value of the transmission bandwidth securable over the communications route must be estimated (this is known as "bandwidth estimate") and the transmission rate of data from the sending terminal must be changed in accordance with temporal variations in the bandwidth (this is known as "transmission rate control"). In particular, data transmission using UDP (User Datagram Protocol) packets is different from TCP (Transmission Control Protocol) in that flow control is not performed in the transport layer, so that the transmission rate of the data must be controlled in the application layer. Additionally, the bandwidth must be ensured at intermediate nodes on the transmission path, such as routers, if the transmission quality is to be further improved.
The following is an assessment of conventional technologies pertaining to (1) bandwidth estimation, (2) transmission rate control, and (3) ensuring bandwidth.

(1) Conventional Technologies for Bandwidth Estimation

Conventional technologies for estimating the bandwidth can be broadly divided into the pathchar method and the Pair Packet method. The pathchar method and the Pair Packet method are described below.
(i) Pathchar method: Pathchar was offered as one method for estimating the bandwidth across a communications route. As with traceroute, packets with n in the TTL (Time To Live) field are sent to measure the RTT (Round Trip Time) between each of the routers by sending a TTL Expired message with ICMP (Internet Control Message Protocol) packets to the nth router on the route (A. B. Downey et al., "Using pathchar estimate Internet link characteristics", ACM SIGCOMM '99).
With pathchar, the bandwidth is estimated by the statistical processing of a large amount of RTT data. By further application of statistical processing, pchar can increase accuracy while calculating the reliability of the estimated bandwidth.
(ii) Pair Packet Method: Bandwidth estimation via the Pair Packet method is performed as follows: A sending terminal sends bandwidth estimation packets consecutively to a receiving terminal. Differences in the packet processing speeds of the links cause intervals between the bandwidth estimation packets after they traverse a bottleneck. These intervals are measured to calculate the bandwidth of the bottleneck link using the size of the bandwidth estimation packets (R. L. Carter et al., "Measuring Bottleneck Link Speed in Packet-Switched Networks", Technical Report BU-CS-96-006, Computer Science Department, Boston University, March 1996).

(2) Conventional Technologies for Transmission Rate Control

One example of conventional transmission rate control for UDP packets is the DAA (Direct Adjustment Algorithm) method (D. Sisalem et al., "The Direct Adjustment Algorithm: A TCP-Friendly Adaptation Scheme", Technical Report GMD-FOKUS. August 1997. Available from http://www.fokus.gmd.dc/usr/sisalem). Another example is the LDA (Loss-Delay Based Adjustment Algorithm) method (D. Sisalem et al., "The Loss-Delay Based Adjustment Algorithm: A TCP-Friendly Adaptation Scheme", in the proceedings of NOSSDAV'98, July, Cambridge, UK). With the DAA and LDA methods, the data loss rate is fed back to the sending terminal from the receiving terminal using RTCP (RTP Control Protocol), and the transmission rate of the data is changed based on the packet loss rate or the reception rate of the receiving terminal, for example.
There is also a method in which a single virtual buffer is assumed in the transmission path from the sending terminal to the receiving terminal, and the transmission rate is adjusted so that the amount of residual data in the virtual buffer becomes approximate to the target buffer amount (JP H11-308271A).
This method for adjusting the amount of sent data in accordance with the assessed transmission rate is different when sending real-time data and when sending accumulative data. For example, when delivering real-time data, such as when delivering video images directly from a surveillance camera, the encoding rate can be directly designated to the encoder. In the case of accumulative data, the encoding rate cannot be designated because the video has already been encoded. Consequently, for accumulative data, a method is adopted wherein identical data are encoded at different encoding rates and delivered at the transmission rate closest to the assessed transmission rate. This method is utilized by RealVideo, for example (http://service.jp.real.com/help/faq/surestream.html).

Other conceivable methods include matching the amount of sent data to the transmission rate by subjecting the encoded data to a culling process (for example, clipping the frames of video data) and then delivering, or restoring the video data and then again encoding at the designated encoding rate.

(3) Conventional Technologies for Ensuring Bandwidth

In FTTH (Fiber To The Home), a method is proposed for ensuring the minimum usable bandwidth and restricting the maximum usable bandwidth.

With the above conventional technologies alone, it is difficult to carry out data transmission with a stable transmission quality over a transmission path such as the Internet where there are various connection modes as well as variations in the transmission bandwidth. The following are examples of problems arising with these conventional technologies.

*First Problem*

In the pathchar method, 32 sets are sent out, wherein a single set includes packets of 46 sizes, ranging from 32 bytes to 1472 bytes at 32 byte intervals. Therefore, to measure the bandwidth of a single link, 1472 packets are sent and considerable time is needed to make the estimate.

*Second Problem*

When using the Pair Packet method to make an actual estimate of the bandwidth, packets for estimating the bandwidth are sent in addition to the data packets that are actually supposed to be sent, thus wasting transmission bandwidth. Furthermore, when making an actual estimate of the bandwidth, the sending and receiving terminals must be provided with a protocol for bandwidth estimation in addition to the protocol for the sending of data packets.

*Third Problem*

The DAA method and the LDA method use the packet loss rate to calculate the transmission rate. As with these methods, methods for controlling the transmission rate based on the loss rate are effective in Ethernets and in multicasts. However, when a narrowband transmission path is used in end-to-end communications over an IP network, a long period of time is required from the occurring of packet loss to the change in the transmission rate. This is because packet loss is created by buffer overflow of the bottleneck link, so information regarding the packet loss is not delivered to the receiving terminal until all of the data in the overflowed buffer has been transmitted.

On the other hand, methods in which RTT is used to calculate the amount of data buffering in the virtual buffer should permit the adjustment of the transmission rate before buffer overflow occurs. However, because a plurality of buffers on the transmission path resemble a single virtual buffer, the same operation is performed regardless whether the sent data are dispersed over a plurality of buffers or are concentrated in a single buffer. This operation becomes problematic when attempting to increase data throughput.

For example, when the sent data are buffered dispersed over a plurality of buffers, the amount of data residual in each of the buffers is small and the buffers have available space, so the throughput can be increased by setting a large target buffer amount. But when the buffering of the sent data concentrates on a single buffer, then that buffer does not have available space, so setting a large target buffer amount may cause buffer overflow and increased packet loss.

Therefore, the operation must be switched between buffering of data dispersed over a plurality of buffers and buffering of data concentrated in a single buffer. Such switching of the operation, however, is impossible when taking into account only a single virtual buffer.

*Fourth Problem*

When packet loss occurs, the transmission rate is changed in accordance with the packet loss, and when there is no packet loss, the method for controlling the rate can be switched, for example, to permit a prompt response to packet loss that may occur. However, currently there are no proposals for a specific method for achieving this.

As mentioned above in the third problem, in networks such as Ethernet and multicast networks, it is more effective to perform the transmission rate control based on the packet loss, whereas in end-to-end communication it is more effective to adopt the above method when using a transmission path with a large band gap.

Therefore, although the appropriate rate control method differs depending on the transmission path and the method of delivery, there have been no proposals for a method in which the transmission rate control is switched in accordance with the transmission path or the method of delivery.

*Fifth Problem*

When conducting transmission rate control, the initial value of the transmission rate is generally a problem. Making the initial value too large causes packet loss, whereas making the initial value too small, bandwidth cannot be effectively used in the initial stages.

*Sixth Problem*

In FTTH, for example, the encoding rate, the buffering time, and the transmission rate of the contents (such as video, audio, data) to be transmitted were not taken into consideration. For that reason, the transmission quality deteriorated considerably, depending on the transmitted contents.

*Seventh Problem*

One protocol for controlling the data transmission from the sending terminal with the receiving terminal is RTSP (H. Schulzrinne et al., "Real Time Streaming Protocol", RFC 2326, Internet Engineering Taskforce, Apr. 1998). With this protocol, the receiving terminal can request that the sending terminal start and stop sending data, for example, and in response to this request the sending terminal can start and stop sending the data. In conventional transmission paths, however, packets are typically input into a FIFO (First-In First-Out) queue, and when the packets cannot be input into this queue because it is full they are discarded. Thus, there was the problem that when the transmission path was congested, the request from the receiving terminal was delayed or lost due to this congestion, thereby causing delays in starting and stopping the sending of data. In particular, when switching to video of different transmission rates using RTSP to avoid congestion from the receiving terminal, it is necessary that the receiving terminal starts and stops the sending of data reliably and with low latency. Delays in stopping the sending of data further exacerbate the congestion, and delays in starting the sending of data result in choppiness in the video at the receiving terminal.

Also in the case of TCP, discarding packets without discriminating between control packets (such as SYN and FIN packets) and data packets causes delays in establishing and disconnecting sessions, and is problematic from the standpoint of transmission efficiency.

*Eighth Problem*

In networks in which wired networks and wireless networks are connected in alternation, transmitting AV data from an AV server on a wired network to a terminal on a wireless network, for example, requires transmission rate control to avoid congestion in the wired network. However, it is difficult for the receiving terminal to distinguish between packet loss caused by congestion in the wired network and packet loss caused by transmission error in the wireless network. Therefore, across such transmission paths, the application of a method for transmission rate control based on packet loss does not enable suitable transmission rate control. In the case of packet loss caused by congestion, the transmission rate must be lowered to avoid congestion, yet with packet loss caused by transmission errors, lowering the transmission rate does not change the packet loss rate, so it is not necessary for the transmission rate to be lowered.

Moreover, when applying a method for transmission rate control based on the RTT between the sending terminal and the receiving terminal, there is significant jitter in the RTT of the wireless network due to retransmission at the link layer level or processing such as handover and header compression, and thus an accurate transmission rate control was difficult (Nishida, "Thought of TCP enhancement in wireless networks", Mobile Computing and Wireless Communication Research Group Proceedings 14-6, pp.39-45, Information Processing Society of Japan, September, 2000).

DISCLOSURE OF THE INVENTION

In light of these conventional problems, it is an object of the present invention to achieve data transmission at a stable transmission quality over a transmission path such as the Internet in which there are various connection schemes and fluctuations in the transmission bandwidth (and in particular in connection schemes with mixed wired and wireless networks, in which it has conventionally been difficult to carry out data transmission at a stable transmission quality).

To achieve this object, in a first data sending/receiving method according to the present invention, a transmission rate from a sending terminal is determined in accordance with a state of receiving and/or sending data by all or a portion of intermediate nodes provided on a transmission path between the sending terminal and a receiving terminal.

A second data sending/receiving method according to the present invention includes a step in which an intermediate node adds congestion information indicating that congestion has occurred, if congestion occurs at the intermediate node, to data and sends the data to a receiving terminal; a step in which the receiving terminal determines a transmission rate in accordance with the congestion information and requests a sending terminal to change the transmission rate; and a step in which the sending terminal changes the data transmission rate in accordance with the request.

In a third data sending/receiving method according to the present invention, a plurality of bandwidth estimation packets are sent at a specific interval from a sending terminal over a transmission path between the sending terminal and a receiving terminal, and the arrival interval between the packets is measured at the receiving terminal to estimate the maximum usable bandwidth on the transmission path; wherein a portion of data packets sent from the sending terminal are used as the bandwidth estimation packets; information expressing which data packets of the sent data packets were sent for bandwidth estimation is marked in the sent data packets or sent independently to the receiving terminal; and the results of the measurement at the receiving terminal are sent to the sending terminal.

In a fourth data sending/receiving method according to the present invention, packets having information regarding control for sending/receiving data are given priority transmission over data packets during congestion.

BRIEF DESCRIPTION OF THE DRAWINGS

Fig. **1** is a schematic drawing illustrating the overall configuration of the first embodiment of the present invention.

Fig. **2** is a flowchart illustrating the operation of the sending terminal according to the first embodiment of the present invention.

Fig. **3** is a flowchart of the transmission rate control according to the first embodiment of the present invention.

Fig. **4** is a diagram representing a connection scheme in which there is a mixture of wired and wireless networks according to the second embodiment of the present invention.

Fig. **5** is a diagram representing a separate connection scheme in which there is a mixture of wired and wireless networks according to the second embodiment of the present invention.

Fig. **6** is a schematic drawing illustrating the overall configuration of the second embodiment of the present invention.

Fig. **7** is a sequence diagram between the sending terminal and the receiving terminal according to a second embodiment of the present invention.

Fig. **8** is a diagram illustrating the description of information related to the transmission rate according to the second embodiment of the present invention.

Fig. **9** is a flowchart of the transmission rate control according to the second embodiment of the present invention.

Fig. **10** is a diagram representing the connection mode in multicasts according to the third embodiment of the present invention.

Fig. **11** is a diagram representing another connection mode in multicasts according to the third embodiment of the present invention.

Fig. **12** is a schematic drawing illustrating the overall configuration of the third embodiment of the present invention.

Fig. **13** is a sequence diagram between the sending terminal and a plurality of receiving terminals according to a third embodiment of the present invention.

Fig. **14** is a flowchart for the division of a plurality of receiving terminals into groups according to the third embodiment of the present invention.

Fig. **15** is a schematic drawing illustrating the overall configuration of the fourth embodiment of the present invention.

Fig. **16** is a flowchart expressing the operation of the sending terminal according to the fourth embodiment of the present invention.

Fig. **17** is a flowchart of the transmission rate control according to the fourth embodiment of the present invention.

Fig. **18** is a flowchart of the transmission rate control according to the fifth embodiment of the present invention.

Fig. **19** is a schematic drawing illustrating the overall configuration of the sixth embodiment of the present invention.

Fig. **20** is a sequence diagram between the sending terminal and the receiving terminal according to a sixth embodiment of the present invention.

Fig. **21** is a schematic drawing illustrating the overall configuration of the seventh embodiment of the present invention.

Fig. **22** is a sequence diagram between the sending terminal and the receiving terminal according to a seventh embodiment of the present invention.

Fig. **23** is a schematic drawing illustrating the overall configuration according to the eighth embodiment of the present invention.

Fig. **24** is a flowchart expressing the operation of the sending terminal according to the eighth embodiment of the present invention.

Fig. **25** is a schematic drawing illustrating the overall configuration according to the ninth embodiment of the present invention.

Fig. **26** is a sequence diagram between the sending terminal and the receiving terminal according to a ninth embodiment of the present invention.

Fig. **27** is a schematic drawing illustrating the overall configuration according to the tenth embodiment of the present invention.

## BEST MODE FOR CARRYING OUT THE INVENTION

The following is a description of embodiments of the present invention, with reference to the drawings.

*First Embodiment*

The present embodiment relates to a transmission rate control method for determining the transmission rate based on the state of sending or receiving at the intermediate nodes, and is primarily for solving the above-described third and fifth problems.

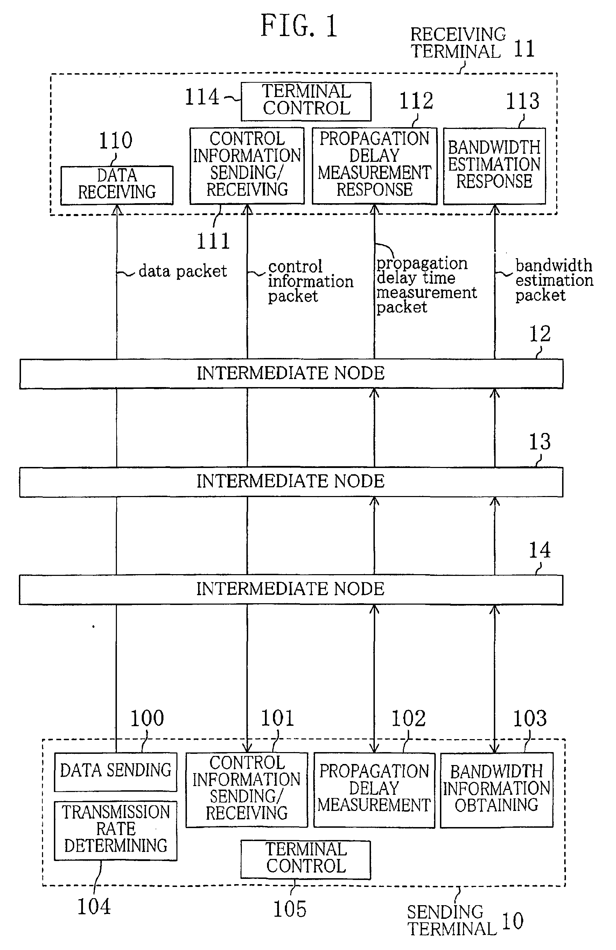

Fig. **1** is a diagram illustrating the overall configuration of the present embodiment. In a sending terminal **10,** a data sending portion **100** is a means for taking data from an input such as a capture, a microphone, or a file, encoding the data if necessary, packetizing the data if necessary, and sending data packets to a receiving terminal **11.** It is also a means for measuring the data amount of the sent data packets. Furthermore, it is also a means for adjusting the transmission rate of the data packets in accordance with the transmission rate determined by a transmission rate determining portion **104.** A data sending protocol such as RTP (Real Time Transport Protocol) is presumed as the protocol for sending the data packets.

A control information sending/receiving portion **101** is a means for sending/receiving control information pertaining to data packets to and from the receiving terminal **11.** Control information is assumed to be information such as the packet loss rate, the RTT, and the maximum sequence number of the data packets received by the receiving terminal **11.** The protocol for sending/receiving control information is presumed to be a data transmission control protocol such as RTCP (RTP Control Protocol).

A propagation delay measurement portion **102** is a means for sending packets capable of measuring the RTT (RTT measurement packets), for example PING (Packet Internet Groper) packets, to intermediate nodes **12, 13** and **14,** or the receiving terminal **11,** and thus measuring the RTT. The RTT measurement packets can be sent to all of the intermediate nodes **12** to **14** and the receiving terminal **11**, or can be sent only to intermediate nodes with a high possibility of residual data packets based on the results of past measurements. It is also possible to send the RTT measurement packets to intermediate nodes with a link bandwidth that is narrower than a designated threshold value. Furthermore, it is also possible to let the propagation delay measurement portion **102** measure fluctuations in the RTT instead of the RTT itself.

A bandwidth information obtaining portion **103** is a means for obtaining the bandwidth of the links on the transmission path between the sending terminal and an intermediate node, between intermediate nodes, and between the receiving terminal and an intermediate node (referred to as "bandwidth information"). As a method for obtaining bandwidth information, it is possible to obtain bandwidth information of the links from the intermediate nodes using a device management protocol such as SNMP (Simple Network Management Protocol), or to use a bandwidth estimating method such as pchar, pathchar, or the method described later in the eighth embodiment. It should be noted that because the bandwidth information obtaining portion **103** is a means for detecting links which become bottlenecks, it may also not be provided if the configuration of the network is evident, the bottleneck link is known, and the bandwidth of the bottleneck link is known or it is not necessary to know the bandwidth of the bottleneck link.

The transmission rate determining portion **104** is a means for determining the transmission rate of the data packets based on the RTT to and from the receiving terminal **11** and to and from intermediate nodes **12** to **14,** the bandwidth information, the data amount of the sent data packets, and the amount of sent data that is residual in the intermediate nodes, for example, obtained from the data sending portion **100,** the control information sending/receiving portion **101,** the propagation delay measurement portion **102,** and the bandwidth information obtaining portion **103.**

A terminal control portion **105** is a means for controlling these portions.

In the receiving terminal **11,** a data receiving portion **110** is a means for receiving data packets from the sending terminal **10,** unpacking the packets if necessary, decoding if necessary, and delivering the data to an output such as a monitor, a speaker, or a file.

A control information sending/receiving portion **111** is a means for sending/receiving control information pertaining to the data packets to and from the sending terminal **10.**

A propagation delay measurement response portion **112** is a means for sending response packets in response to the RTT measurement packets, such as PING packets, that are sent from the propagation delay measurement portion **102.** The propagation delay measurement response portion **112** does not have to be provided if the RTT can be measured by the control information sending/receiving portion **111** (for example, when RTCP is used for the control information transmission protocol).

A bandwidth estimation response portion **113** is a means for responding to the bandwidth estimation packets from the sending terminal **10.** The bandwidth estimation response portion **113** does not have to be provided if the bandwidth information obtaining portion **103** obtains the bandwidth information of the links from the intermediate nodes **12** to **14** using a device management protocol such as SNMP. Also, the bandwidth estimation response portion **113** does not have to be provided if the sending terminal **10** is not provided with the bandwidth information obtaining portion **103.**

A terminal control portion **114** is a means for controlling the various portions of the receiving terminal **11.**

The intermediate node **12** is a node that forwards received data packets to a destination, like an IP router. Furthermore, it is also presumed to (1) buffer the data packets when the arrival rate is higher than the bandwidth of the link to the destination of the transmission, (2) be provided with a device management protocol for bandwidth information notification, or to respond to bandwidth estimation packets (not necessary if the sending terminal **10** is not provided with the bandwidth information obtaining portion **103**), and (3) respond to RTT measurement packets from an authorized sending terminal **10,** that is, a terminal **10** for which connection has been allowed.

With respect to (3), the method for authorizing the sending terminal can be a method in which the IP address of the sending terminal to respond to is registered in the RTT measurement packets, and when the RTT measurement packets are received, the IP address is verified and responses are made only to registered sending terminals.

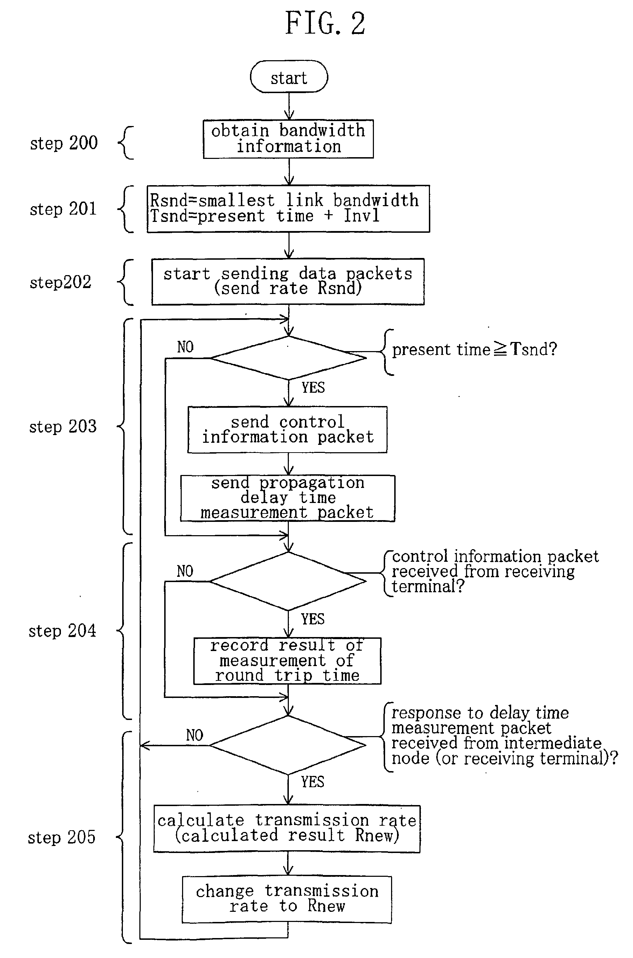

Fig. **2** is a flowchart illustrating how the sending terminal **10** operates according to the present embodiment. The sending terminal **10** obtains bandwidth information before sending data (step 200). This step is performed by the bandwidth information obtaining portion **103.** This step is unnecessary when intermediate nodes that become bottlenecks are known in advance and the bandwidth of the bottleneck link is known or the information of the bandwidth of the bottleneck link is not necessary when determining the transmission rate.

Next, the initial value of the transmission rate $R_{snd}$ of the data packets is determined in accordance with the obtained bandwidth information, and the time $T_{snd}$ at which the control information packets are sent is determined based on the present time and the send interval Invl of the control information packets (step 201). The initial value of the transmission rate is taken as the value of the bandwidth of the narrowest link using the bandwidth information obtained in step 200. Thus, the fifth problem is solved. When the bandwidth of the bottleneck link is not known because step 200 has been omitted, sending is started at a minimum transmission rate, for example. The initial value of the transmission rate is determined by the transmission rate determining portion **104,** and the send time of the control information packets is determined by the control information sending/receiving portion **101.**

Next, sending of the data packets is started (step 202). This step is performed by the data sending portion **100.** At the send time of the control information packets, RTT measurement packets and control information packets are sent (step 203). The RTT measurement packets are sent by the propagation delay measurement portion **102,** and the control information packets are sent by the control information sending/receiving portion **101.** Furthermore, when a response to the RTT measurement packets is received, the results of the measurement are recorded (step 204). This step is performed by the propagation delay measurement portion **102.** When control information packets are received from the receiving terminal **11,** the next transmission rate $R_{new}$ is determined in accordance with the data amount, the bandwidth information, and the measured RTT of the sent data packets (step 205). The operation of this step is performed by the transmission rate determining portion **104.** Repeating steps 203 to 205, the sending terminal **10** continually updates the transmission rate.

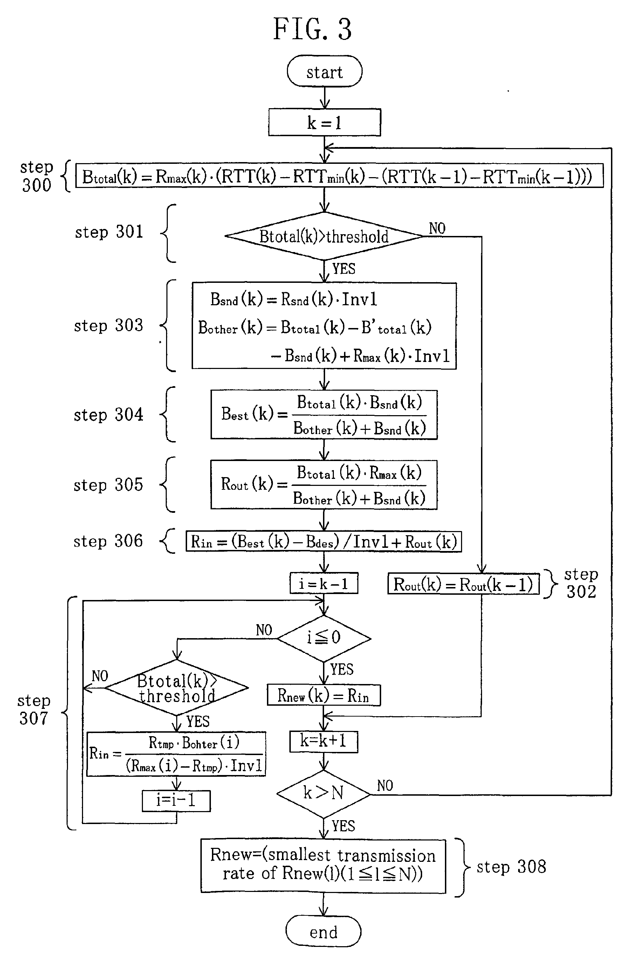

Fig. **3** is a flowchart illustrating the operation of the sending terminal **10** in the step for determining the transmission rate (step 205) in Fig. **2.** This operation is performed by the transmission rate determining portion **104.**

Let us assume that N intermediate nodes exist between the sending terminal **10** and the receiving terminal **11,** and the k-th intermediate node from the sending terminal **10** is the Node(k). The total data amount $B_{total}(k)$ including other flows remaining in the Node(k) is estimated from the round trip times RTT(k) and RTT(k-1) between the sending terminal **10** and Node(k) and Node(k-1), and the link bandwidth $R_{max}(k)$ of the Node(k) (step 300). Here, $RTT_{min}(k)$ is the minimum value of the RTT values heretofore measured between the sending terminal **10** and the Node(k). When the data amount $B_{total}(k)$ is larger than a threshold value, then it is determined that there are residual data packets in the buffer, and when it is smaller than the threshold value, then it is determined that there are no data packets in the Node(k) (step 301).

When it is determined that there are no residual data packets, the output rate from Node(k) is taken as equivalent to the output rate of Node(k-1), the output rate $R_{out}(k)$ of the data packets sent from the intermediate node is calculated, and the procedure moves on to process the Node(k+1) (step 302).

When it is determined that there are residual data packets, the processes of steps 303 to step 307 are performed.

First, the data amount $B_{snd}(k)$ sent from the sending terminal **10** that flowed into the Node(k) during Invl and the data amount $B_{other}(k)$ of other flows to the Node(k) during Invl are calculated (step 303). Here, Invl is the send time interval between control information packets sent from the receiving terminal **11**. $R_{snd}(k)$ is the input rate of the flow of data packets from the sending terminal **10** into the Node(k), and the value thereof is equal to the output rate $R_{out}(k-1)$ of the Node(k-1). Also, $B'_{total}(k)$ is the total amount of data, including other flows, residual in the Node(k) obtained by the previous measurement.

Next, the residual amount of the sent data packets $B_{est}(k)$ is calculated as the value for which the ratio of $B_{snd}(k)$ to Bother(k) is equal to the ratio of the amount of data sent by the sending terminal **10** that is residual in the Node(k) to the data amount of other flows, that is, the value for which

$$B_{other}(k):B_{snd}(k)=B_{total}(k)-B_{est}(k):B_{est}(k) \text{ (step 304)}.$$

Also, the output rate $R_{out}(k)$ of the sent data packets from the Node(k) is calculated as the value for which the ratio of $B_{snd}(k)$ to $B_{other}(k)$ is equal to the ratio of the sent data amount flowing from the Node(k) during Invl to the data amount of other flows, that is, the value for which

$$B_{other}(k):B_{snd}(k) = (R_{max}(k)-R_{out}(k)) \times Invl:R_{out}(k) \times Invl$$

(step 305).

Next, the input rate $R_{in}$ is set such that the sent data amount residual in the Node(k) reaches a target data amount $B_{des}$ after Invl (step 306).

Lastly, $R_{new}(k)$ is found such that the input rate to the Node(k) becomes $R_{in}$ (step 307).

The above calculations are performed for all intermediate nodes, and the smallest value for $R_{new}(k)$ is taken as the next transmission rate $R_{new}$ (step 308).

It should be noted that instead of the above-described method for determining the transmission rate, it is also conceivable to use an algorithm in which the RTT or the RTT jitter between the intermediate nodes and the sending terminal is used to determine the transmission rate, or an algorithm in which information on packet loss at the intermediate nodes is used.

For example, the following is an example of an algorithm using the RTT. First, the RTT(k), the RTT(k-1), the $RTT_{min}(k)$, and the $RTT_{min}(k-1)$ are used to calculate the time T(k) that observed packets are residual in the Node(k):

$$T(k)=RTT(k)-RTT_{min}(k)-(RTT(k-1)-RTT_{min}(k-1)).$$

Then, $R_{snd}(k)$ is calculated such that T(k) becomes close to a threshold value $T_{th}$ (target value of the time that data reside in intermediate nodes, fixed value set by user):

$$R_{snd}(k)=(1-T(k)/T_{th}) \times R_{max}(k)/n+R_{rev}.$$

Here, $R_{max}(k)$ is the maximum transmission bandwidth of the link which has been measured during the bandwidth estimation. The parameter *n* is for determining the ratio at which the transmission rate increases or decreases. When this value is set to *n*=N, then, if T(k) is constantly 0 (that is, when congestion never occurs), N steps are required from the state of $R_{rev}=0$ until the maximum transmission rate is achieved. It is also possible not to perform bandwidth estimation and to have the user suitably determine the value of $R_{max}(k)$. In this case, the bandwidth information obtaining portion **103** becomes unnecessary, so there is the advantage that installation can be simplified and the time for conducting bandwidth estimation can be omitted. $R_{rcv}$ is the reception rate calculated from feedback information from the receiving terminal **11**, and for example when receiving feedback information using RTCP, can be calculated as

$$R_{rcv}=P\times(Seq_{max}(j)-Seq_{max}(j-1))/I\times((1-Loss).$$

Here, P is the average sent packet size, I is the reception interval of the RTCP receiver report, $Seq_{max}(j)$ is the maximum sequence number of the j-th RTCP receiver report, and "Loss" is the packet loss rate.

The above calculations are performed for all of the intermediate nodes, and the smallest $R_{snd}(k)$ is taken as the transmission rate $R_{new}$ of the data.

The following algorithm is an example of an algorithm in which RTT jitter is used. First, the average value ST (k) of the past m times of T(k) indicated above and the standard variation J(k) of T(k) are used to calculate

$$T_{th}(k)=ST(k)+k\times J(k).$$

Here *m* and *k* are constants. $T_{th}(k)$ and T(k) are compared, and when $T_{th}(k)$ is larger than T(k), the transmission rate $R_{snd}(k)$ to the Node(k) is given as $R_{snd}(k)=R_{rcv}+B$, and when $T_{th}(k)$ is smaller than T(k), then $R_{snd}(k)=R_{rcv}-B$. Here, B is the value determining the size of the variations of increases and decreases in the transmission rate. The above calculations are performed for all the intermediate nodes, and the smallest value is taken as the transmission rate $R_{new}$.

Furthermore, the following algorithm can be applied when the information on packet loss is used. First, an arrangement is assumed in which the packet loss rate is notified from the intermediate nodes, and the transmission rate $R_{new}$ is calculated as

$$R_{new}=(present\ transmission\ rate)\times(1-Loss).$$

Alternatively, an arrangement is assumed in which packet loss due to buffer overflow is notified from the intermediate nodes, and when a notification of packet loss is received, the transmission rate is exponentially or linearly reduced, for example, by $R_{new}=(present\ transmission\ rate)\times\alpha$ or $R_{new}=(present\ transmission\ rate)-\alpha'$ (where $\alpha$ and $\alpha'$ are constants).

It should be noted that in the above example, the calculations for $R_{snd}(k)$ were performed for all intermediate nodes, however, it is also possible to perform the above calculations by selecting a bottleneck link on the transmission path and sending RTT measurement packets only to the intermediate nodes connected to that link. A conceivable method for selecting the bottleneck link, for example, is to regard a link fulfilling the condition

$$R_{max}(j)<\alpha\times min(R_{max}(i))$$

as a bottleneck link. Here, min(X(i)) represents the smallest value of the elements of X(i). Also, $\alpha$ is a value representing the detection sensitivity of bottleneck links, and the larger this value, the more links are determined to be bottleneck links.

*Second Embodiment*

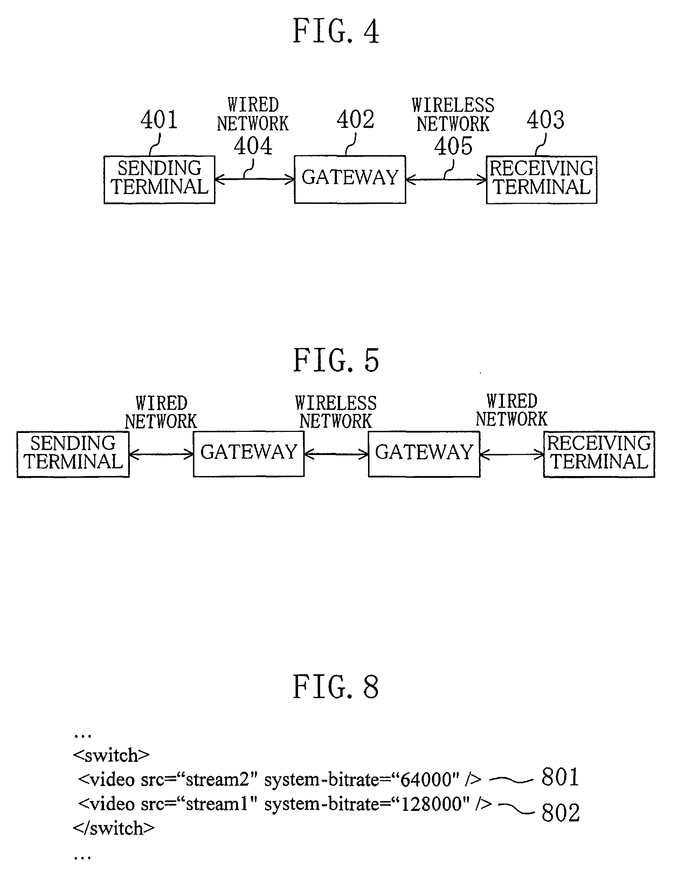

The following explains a solution of the eighth problem. If the transmission rate control method of the present invention, in which the congestion state of the intermediate nodes is utilized, is used when transmitting data over a network such as that shown in Fig. **4,** in which a wired network **404** and a wireless network **405** are alternately connected, from a sending terminal **401** on the wired network **404** to a receiving terminal **403** on the wireless network **405,** for example, then transmission rate control can be performed without being affected by the jitter of propagation delay in the wireless network **405**. A case in which a mobile terminal such as a portable telephone is the receiving terminal **403** and is connected to a server (sending terminal) **401** is conceivable as such a connection mode. This means, the server **401** and a gateway **402** are connected by a wired network **404** such as an Ethernet or by ATM (Asynchronous Transmission Mode), and the gateway **402** and the receiving terminal **403** are connected by a wireless network **405** such as a wireless LAN (Local Area Network) or by W-CDMA (Wideband Code Division Multiple Access). Another similar connection mode is a case in which a home network is configured by wireless LAN or BlueTooth and is connected to the Internet through a telephone line, for example, from a home gateway **402,** for example, connecting the home network to an outside network. Conceivable applications include video delivery such as Video on Demand or two-way communication such as TV telephone.

To offer a more specific explanation, congestion ordinarily occurs in the gateway (or router) **402** for connecting the wired network **404** to the wireless network **405,** so the state of congestion between the sending terminal **401** and the gateway **402** can be measured, for example, using RTT (other intermediate nodes may also be included) to control the transmission amount from the sending terminal **401.** That is, the gateway **402** may be regarded as one of the intermediate nodes **12** to **14** of the first embodiment, and transmission rate control is performed according to the state of that intermediate node.

When measuring the RTT or jitter in the RTT to detect the state of congestion between the sending terminal **401** and the receiving terminal **403,** it is often that case that there is large jitter in the wireless network **405** and the state of congestion cannot be accurately detected. However, if the present invention is adopted, the RTT or RTT jitter of only the wired network **404** between the sending terminal **401** and the gateway **402** is measured, thus permitting accurate detection of congestion. Furthermore, the cause of packet loss is congestion in the wired network **404** and transmission error in the wireless network **405,** so when packet loss is observed between the sending terminal **401** and the receiving terminal **403,** it is not possible to conduct appropriate transmission rate control, as was mentioned in the eighth problem. However, if the present invention is applied, only the packet loss on the wired network **404** between the sending terminal **401** and the gateway **402** is measured, and therefore it is possible to measure only the packet loss caused by congestion and to execute appropriate transmission rate control.

It should be noted that aside from the arrangement of Fig. **4**, a connection mode such as that shown in Fig. **5**, or connection modes in which a plurality of wired and wireless networks are traversed are also conceivable, and the present invention can be applied in such connection modes as well if there is a bottleneck link in the wired network between the sending terminal and the first gateway from the sending terminal and there are no other bottleneck links from the second wired network onward. A conceivable connection mode for that shown in Fig. **5** is a home network that is constructed as wired and is connected to an outside network by FWA (Fixed Wireless Access), for example. A similar connection mode would be a case in which a network inside an automobile is constructed as wired and connected to an outside network by DSRC (Dedicated Short Range Communication), for example. Conceivable applications include video delivery such as Video on Demand and two-way communications such as TV telephone.

The following two examples are methods conceivable in addition to the method mentioned above to control, in response to congestion occurring in the wired network, the data transmission amount over a network such as shown in Fig. **4** and Fig. **5,** in which wireless and wired networks are connected in alternation.

In the first method, at least one of the RTT, the packet loss, and the jitter, for example, between the sending terminal and the receiving terminal is measured to calculate the variation width or period of change thereof, and it is determined whether the network is in a state in which congestion is occurring or in a state in which handover or transmission errors are occurring. Then, if the state is determined to be the former, the sending terminal controls the amount of sent data in accordance with the state of the congestion.

In the second method, when congestion occurs in a router such as a gateway, the ECN (Explicit Congestion Notification) flag of IP packets for indicating that congestion has occurred is used, and the router notifies the receiving terminal of the congestion (referred to as "ECN method").

First, the sending terminal encodes identical contents with several different encoding rates. When sending in real time, such encoding can be performed by a plurality of encoders, and when sending stored contents, the encoding can be performed in advance with a plurality of encoding rates. The sending terminal uses SMIL (Synchronized Multimedia Integration Language), for example, to indicate to the receiving terminal the plurality of encoding rates that are sent and the receiving terminal selectively receives one of these using RTSP, for example. If congestion occurs during sending, the above-mentioned ECN flag is set by the router, and thus the receiving terminal is able to detect the occurrence of congestion by monitoring the ECN flag. Then, when congestion is detected, the receiving terminal uses RTSP, for example, to perform reception (and reproduction) by switching the selection to a lower encoding rate in order to alleviate the state of congestion. It should be noted that to which encoding rate the selection is switched can be determined, for example, by comparing the number of IP packets with set ECN flag that have been received during a predetermined time period to a predetermined threshold value. Of course, (1) if no IP packets with set ECN flag are received during the predetermined period, or (2) if the number of IP packets with set ECN flag received during the predetermined period is less than the predetermined threshold value, then, by switching the selection to a higher encoding rate using RTSP, for example, it is possible to increase the transmission rate while avoiding congestion, and it is possible to achieve a content transmission of high quality. As in the above case, which encoding rate to switch the selection to can be determined by comparing the number of IP packets with set ECN flag to a predetermined threshold value.

With the ECN method, congestion is indicated explicitly to the receiving terminal by using an ECN flag. Thus, the receiving terminal can accurately detect congestion even across a transmission path in which wired and wireless networks are connected in alternation, and appropriate transmission rate control can be performed. Furthermore, because in the ECN method the transmission rate is switched from the receiving terminal, it has the effect that user requests can be easily reflected. This means that the range of variation in the transmission rate only has to be registered in the receiving terminal. In the case of a transmission rate control scheme controlled from the sending terminal, the range of variation in the transmission rate must be registered in the sending terminal, so a protocol for registration, for example, is required. Additionally, the ECN method permits congestion detection with the receiving terminal and the execution of appropriate transmission rate control, even for a connection mode in which a plurality of wired networks and wireless networks are connected to one another.

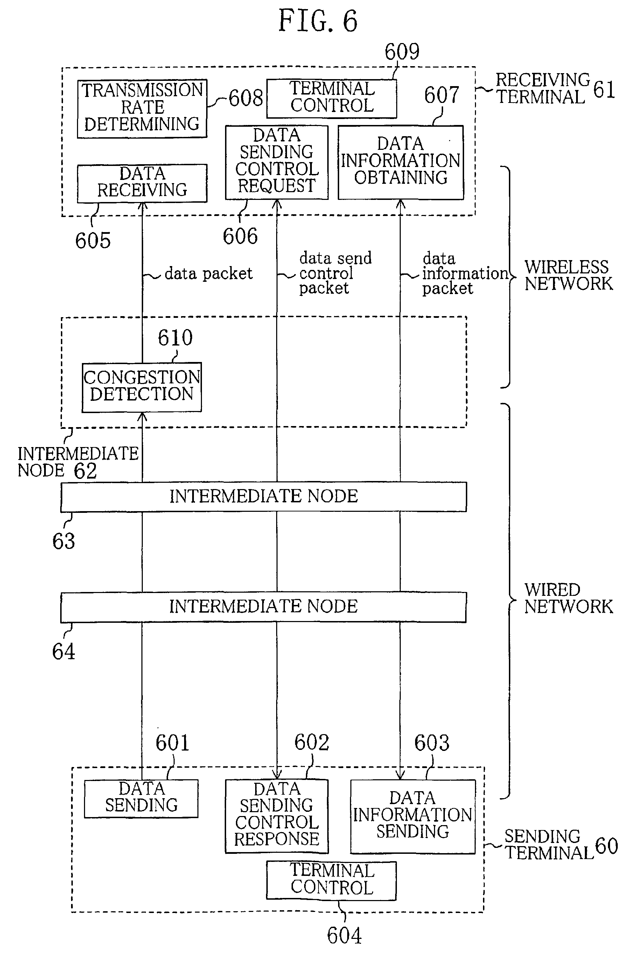

Fig. **6** is a schematic drawing representing an overall view of the ECN method according to the present embodiment. A data sending portion **601** and a terminal control portion **604** in a sending terminal **60** and a terminal control portion **609** in a receiving terminal **61** are equivalent to those of Fig. **1.**

A data information sending portion **603** is a means for reporting the data transmission rate that can be sent by the sending terminal **60.** SMIL, for example, can be adopted as the descriptive language for describing the data transmission rate that can be sent by the sending terminal **60.**

A data transmission control response portion **602** is a means for receiving a request such as data send/stop from the receiving terminal **61,** orders the data sending portion **601** to start or stop the sending of data based on this request, and responds to the receiving terminal **61** with the result of whether that request has been accepted. RTSP, for example, can be adopted as the sending/receiving protocol for request/response between the sending terminal **60** and the receiving terminal **61.**

A congestion detection portion **610** provided in an intermediate node **62,** for example, is a means for monitoring the state of data sending and receiving in that intermediate node **62,** and when congestion occurs, it adds congestion information (such as flags) indicating that congestion has occurred to the data packets, and sends those data packets to the receiving terminal **61.** The congestion information can be indicated using the ECN flag in IP packets, for example. The congestion detection portion **610** can be installed in all intermediate nodes **62, 63,** and **64,** or only in intermediate nodes in which congestion tends to occur.

In the receiving terminal **61,** a data receiving portion **605** corresponds to the data receiving portion **110** of Fig. **1** to which the function of notifying a transmission rate determining portion **608** of the congestion information added by the intermediate node **62** has been added.

A data information obtaining portion **607** is a means for obtaining the data transmission rates that can be sent by the sending terminal **60** and notifying them to a transmission rate determining portion **608.**

The transmission rate determining portion **608** is a means for determining the transmission rate in accordance with the notified congestion information and the transmission rates that can be sent by the sending terminal **60,** and notifying a data sending control request portion **606** of the determined transmission rate.

The data sending control request portion **606** is a means for sending a request such as data send/stop based on the transmission rate determined by the transmission rate determining portion **608.**

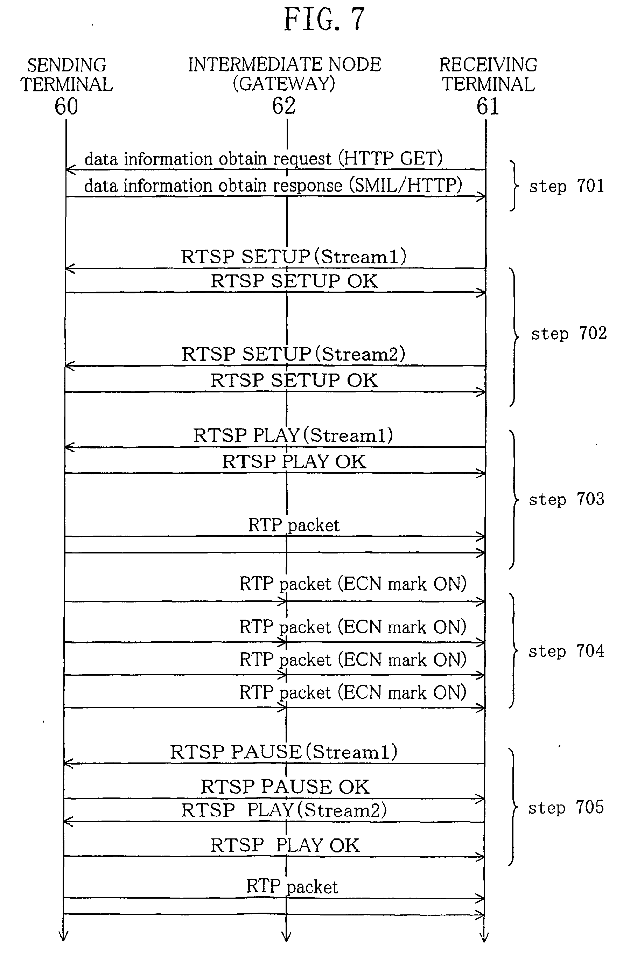

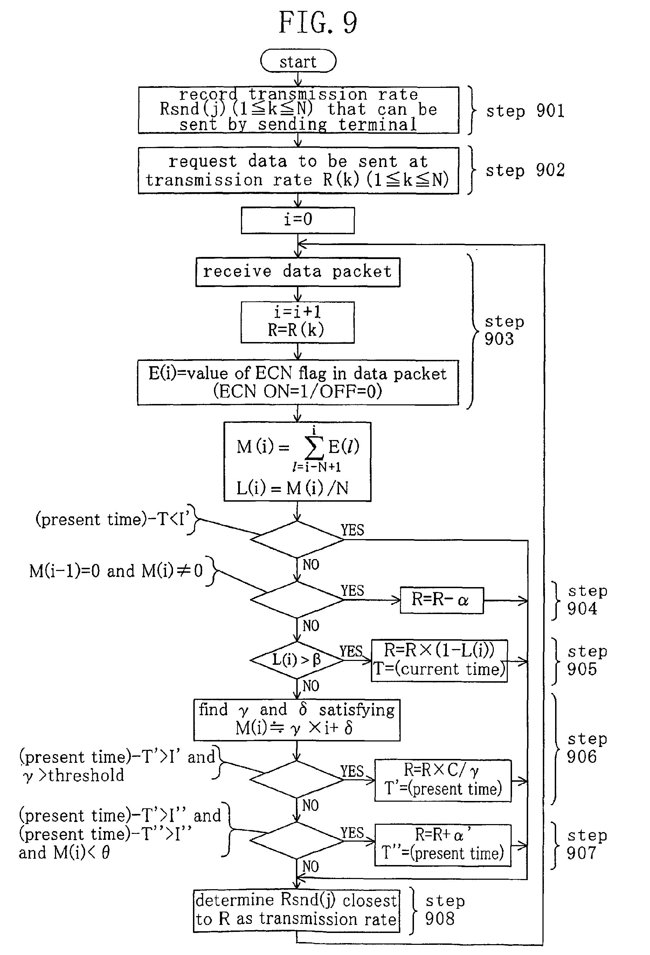

Fig **7** is a sequence example representing the flow of the operation of the present ECN scheme. First, using SMIL the receiving terminal **61** obtains the transmission rates that can be sent by the sending terminal **60** (step 701). Fig. **8** shows the portion of the SMIL description used in this example that pertains to the transmission rate. Looking at Fig. **8,** it can be understood that in this example data can be sent at two different transmission rates, namely 64Kbps (801) if Stream 2 is selected, and 128Kbps (802) if Stream 1 is selected.

In accordance with the received SMIL description, the receiving terminal **61** uses the SETUP method of RTSP to prepare data of all transmission rates such that they are in a state in which they can be sent (Ready state) (step 702). Of course, it is not absolutely necessary that data of all transmission rates are put into the Ready state before the sending of data begins, and it is also possible to put only data of a portion of the transmission rates into the Ready state before the sending of data begins, and to put the data of other transmission rates into the Ready state as necessary during the sending of data.

Next, the receiving terminal **61** selects one of the transmission rates that can be sent by the sending terminal **60** and requests that the sending terminal **60** starts sending data. The sending terminal **60** then starts sending data in response to that request (step **703**). In Fig. **7,** RTP is adopted as the protocol for sending data, and the sending of data is started at 128Kbps (Stream 1). Thereafter, if congestion occurs in the intermediate node **62** during the sending of data, the ECN flag is used to notify the receiving terminal **61** that congestion has occurred (step 704). The receiving terminal **61** determines the transmission rate based on the ECN flag set by the intermediate node **62,** and to change the transmission rate uses the PAUSE method of RTSP to temporarily stop the sending of data that are currently being received and uses the PLAY method of RTSP to notify the sending terminal **60** to send the data at another transmission rate from where the data that were currently received left off. The PLAY method of RTSP has a header (Range header) for indicating the reproduction range, so this can be used to start sending from midway in the data. In accordance with the pause/play request, the sending terminal **60** pauses the sending of data at the transmission rate currently being sent, and starts the sending of data at another transmission rate (step 705). In Fig. **7** the sending of data at 128Kbps (Stream 1) is paused, and sending of data at 64Kbps (Stream 2) is started.

Fig. **9** is a flowchart illustrating an algorithm for determining the transmission rate with the transmission rate determining portion **608.** First, the transmission rates $R_{snd}(j)(1 \leqq j \leqq N)$ that can be sent by the sending terminal **60** are obtained and recorded (step 901). In this example, it is presumed that N discrete transmission rates can be sent by the sending terminal **60.**

Next, one of the transmission rates that can be sent by the sending terminal **60** is determined as the initial transmission rate, and is notified to the data sending control request portion **606** (step 902). Then, each time a data packet is received, the number of packets among the past N number of received packets where the ECN flag was set is taken as M, and the ratio L=M/N is calculated (step 903). Here, the M and L that are calculated when the i-th data packet is received are denoted as M(i) and L(i), respectively, and the transmission rate is determined according to the following rules.

(1) If M(i-1)=0 and M(i) ≠ 0, then the transmission rate is decreased by $\alpha$ from the transmission rate R that is currently being received (step 904). Here, $\alpha$ is a fixed value.

(2) If L(i)>$\beta$ ($\beta$ is a constant where 0<$\beta$<1), then the transmission rate is decreased to (current transmission rate) $\times$(1-L(i)). After this step has been carried out, the transmission rate is not changed for I seconds (step 905).

(3) A first approximation line M(i) .$\gamma \times$ i+ $\delta$ is determined from M(l)(i-K$\leqq$1$\leqq$i, where K is a constant) by the method of least squares, for example, and if $\gamma$ is larger than a certain threshold value, then the transmission rate is decreased to (current transmission rate)$\times$C/$\gamma$ (where C is a constant). After this step has been performed, the step is not performed for I' seconds (step 906). This step serves the role of lowering the transmission rate when M(i) tends to increase.

(4) If the transmission rate has been changed and I'' seconds have passed, and M(i)<$\theta$ (where $\theta$ is a constant), then the transmission rate is increased to (current transmission rate)+$\alpha$' (where $\alpha$' is a constant). After this step has been performed, the step is not performed for I'' seconds (step 907).

(5) When none of (1) to (4) are applicable, the transmission rate is not changed.

The value of the transmission rate determined by the above steps is compared to the transmission rates that can be sent by the sending terminal **60,** and the closest value thereto is chosen as the transmission rate. When this transmission rate is different from the transmission rate at which reception is currently being performed, the new transmission rate is notified to the data sending control request portion **606** (step 908).

The present embodiment describes a method for determining the transmission rate. With respect to a method for adjusting the amount of sent data in accordance with the determined transmission rate, a method mentioned earlier in the conventional examples can be used. That is, for real time data, adjustment is possible by indicating the encoding rate directly to the encoder. For accumulative data, adjustment is possible by encoding the data at a plurality of encoding rates and sending the data of the encoding rate closest to the determined transmission rate, for example.

*Third Embodiment*

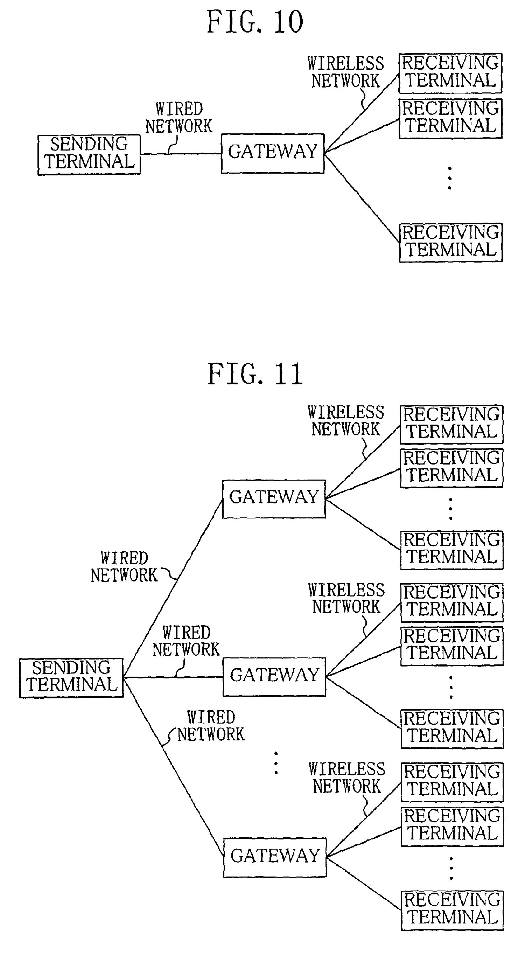

The present invention is not limited to one-to-one data sending/receiving, and can also be used for one-to-many data sending/receiving such as multicasts. As shown in Fig. **10,** in the case of multicasts over a connection scheme in which a sending terminal and a plurality of receiving terminals are connected via a single gateway, the amount of data sent from the sending terminal can be controlled by measuring at least one of for example the RTT, packet loss, and jitter between the sending terminal and the gateway, in the same way as in the above. This means that the control is carried out by measuring the state of congestion in the wired network.

As shown in Fig. **11,** however, if determining the transmission rate in a connection scheme in which a sending terminal is connected to a plurality of receiving terminals via a plurality of gateways, transmission rate control optimal for all receiving terminals cannot be performed with only the transmission rate control method explained above, because there is more than one wired network transmission path.

The present embodiment provides a method for transmission rate control in a connection scheme in which the sending terminal is connected to a plurality of gateways.

When a sending terminal is connected to a plurality of receiving terminals via a plurality of gateways, gateways in which congestion is occurring are separated into groups in accordance with the state of congestion at the plurality of gateways obtained by measurement, and the amount of sent data is adjusted for each group. With IPv4 (Internet Protocol Version 4), the value of the TTL can be used to limit the scope of these groups. For example, the amount of sent data is reduced for groups to which receiving terminals experiencing congestion belong, and the amount of sent data is increased for groups not experiencing congestion. By such grouping, fine control of the amount of sent data can be performed in response to the state of congestion across the network.

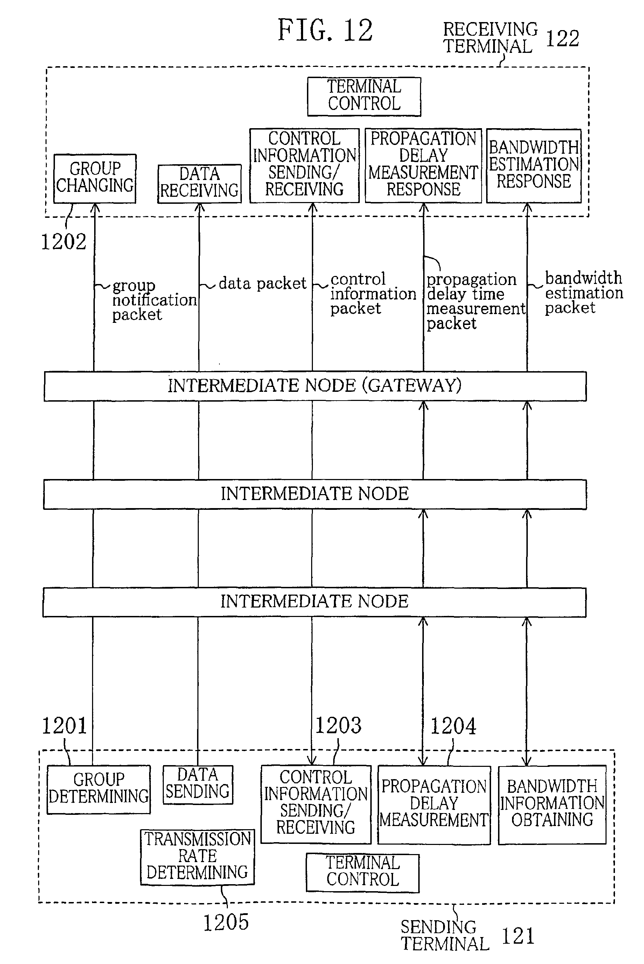

Fig. **12** is a schematic drawing illustrating the overall configuration of the present embodiment. Except for a group determining portion **1201,** a sending terminal **121** is equal to the sending terminal **10** of Fig. **1.** Except for a group changing portion **1202,** a receiving terminal **122**, is equal to the receiving terminal **11** of Fig. **1.**

The group determining portion **1201** is a means for grouping the receiving terminals **122** based on at least one of the statistical information such as the RTT, packet loss, and jitter observed by a control information sending/receiving portion **1203,** the RTT to and from each of the intermediate nodes (including the plurality of gateways) which is observed by a propagation delay measurement portion **1204,** and the transmission rate determined by a transmission rate determining portion **1205,** and notifies the receiving terminals **122** of the groups to which they belong.

The group changing portion **1202** is a means for changing the assigned group to the notified group when the group notified from the sending terminal **121** is different from the currently assigned group.

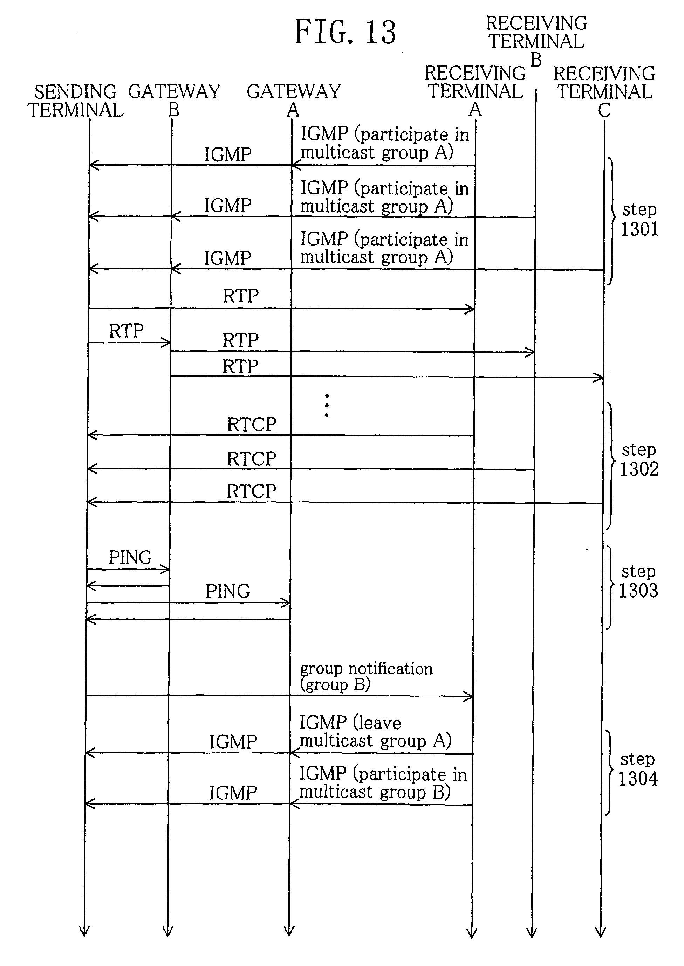

Fig. **13** is a sequence diagram representing the operation of the present embodiment. In this example, a receiving terminal A has been connected to a gateway A, and receiving terminals B and C have been connected to a gateway B.

When starting the reception of video by multicasting, the receiving terminals A, B, and C use an IGMP (Internet Group Management Protocol) to participate in a specific multicast group (step 1301). In this example, the receiving terminals initially participate in Group A. The sending terminal **121** can ascertain that the receiving terminals have participated in a multicast group by the control information packets from the receiving terminals (step 1302). The sending terminal **121** also sends RTT observation packets to links that may become a bottleneck link on the transmission paths to the receiving terminals, and determines the RTT (step 1303). Using the RTT and other information obtained from the control information packets such as the RTT, packet loss, and jitter between itself and the receiving terminals, the sending terminal **121** determines the groups to which the terminals belong and notifies them to the receiving terminals (step 1304). In this example, a notification is sent for changing the receiving terminal A to group B. The receiving terminal A leaves group A and then joins group B, because the group it currently belongs to is different from the group notified from the sending terminal **121** (step 1304).

It should be noted that the transmission rate when sending data to the multicast groups is the average value of the transmission rate for the receiving terminals belonging to that particular multicast group (which can be calculated with the method disclosed in the first or second embodiment). Since receiving terminals with similar tendencies for transmission rate change are combined into the same group as explained below, even the simple method for transmission rate control described above enables a transmission rate that is for the most part satisfactory for the receiving terminals participating in that multicast group.

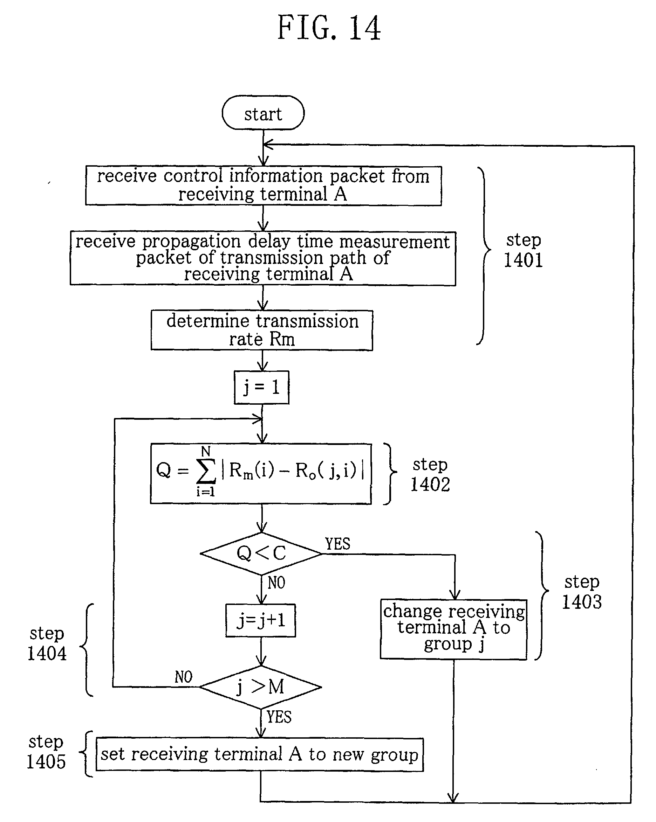

Fig. **14** is a flowchart showing how the group determining portion **1201** operates. First, it receives control information packets from the receiving terminal A and RTT observation packets from intermediate nodes on the transmission path to the receiving terminal A, and determines the transmission rate Rm in accordance with the method for transmission rate control described in the first or second embodiment (step 1401). Next, the difference Q in the transmission rates is calculated from the transmission rates Rm(i) ($1 \leqq i \leqq N$) calculated for the past N times for the receiving terminal A, and the transmission rates Ro(j,i) calculated for the past N times for the multicast group j ($1 \leqq i \leqq M$, where M is the number of multicast groups managed by the sending terminal **121**) (step 1402). If Q is smaller than a certain threshold value C, then the tendency of the transmission rate change is determined to be similar, and the receiving terminal A is changed to the multicast group j (step 1403). If Q is larger than C, then the tendency of the transmission rate change is regarded as different, and the receiving terminal A is not included in the multicast group j (step 1404). The steps 1403 and 1404 are repeated until the receiving terminal A is sorted into one of the multicast groups or until the tendency of the change in the transmission rate has been compared to all of the multicast groups. If no multicast group satisfies Q<C even after the tendency of the change in transmission rate has been compared to all multicast groups, then a new multicast group is created and the receiving terminal A is changed to that group (step 1405).

In the present embodiment, as the method for grouping, terminals with similar tendencies in the fluctuations of the transmission rate can be grouped together, but it is also possible to simply regard the receiving terminals connected to the same gateway as a single group. Furthermore, grouping can also be carried out not using the tendency of the fluctuations in transmission rate but grouping terminals together that have similar tendencies for packet loss or fluctuations of the RTT.

Moreover, in the present embodiment, the RTT between the sending terminal **121** and the intermediate nodes is used to determine the transmission rate, but as was mentioned in the explanation of Fig. **3**, it is also possible to determine the transmission rate in accordance with fluctuation in RTT between the intermediate nodes or the packet loss at the intermediate nodes, and carry out the grouping based on the determined transmission rate.

Furthermore, it is also possible to measure at least one of the RTT, packet loss, and jitter, for example, between the sending terminal **121** and the receiving terminals and calculate the variation width or period of change thereof, to determine whether the network is in a state in which congestion is occurring or in a state in which handover or transmission errors are occurring, and if it is determined to be the former, the sending terminal **121** can perform grouping as described earlier in accordance with the state of the congestion.

In the present embodiment, grouping was performed using a method in which the sending terminal **121** determines which group the receiving terminals should belong to and the receiving terminals follow these instructions, but it is also possible that the receiving terminals have group determining portions **1201** to permit grouping performed from the receiving terminals. For example, in the case of a configuration in which the group determining portion **1201** is added to the receiving terminal **61** of the configuration shown in Fig. **6,** the receiving terminal can directly carry out grouping by using a method in which the sending terminal **60** sends to the receiving terminal **61** data information sets of transmission rate that can be sent and multicast address, and the multicast group the receiving terminal **61** participates in is changed in accordance with the transmission rate that is determined by the transmission rate determining portion **608.**

Furthermore, in the present embodiment, if AV transmission using hierarchical encoding is possible, the receiving terminal is able to determine the level to use in accordance with the state of congestion. For example, if the degree of congestion is severe, it is possible to use only the lowest level.

As explained above, with the first through third embodiments, it is possible to conduct suitable transmission rate control, even in a network such as the Internet with connections in various connection modes, by performing transmission rate control taking into consideration the sending and receiving of data at the intermediate nodes. In particular, appropriate transmission rate control can be carried out for applications such as TV telephone and Video on Demand, regardless of whether the communication is one-to-one or one-to-many (multicast), over connection modes in which there is a mixture of wireless networks such as wireless LAN, DSRC, W-CDMA, and FWA, and wired networks such as an Ethernet and ATM, in which suitable transmission rate control was conventionally difficult to perform.

*Fourth Embodiment*

The present embodiment relates to a method for changing the target value in accordance with the state of an intermediate node when attempting to let the amount of residual data that is residual in the intermediate node be close to the target value, and is primarily for solving the aforementioned third problem.

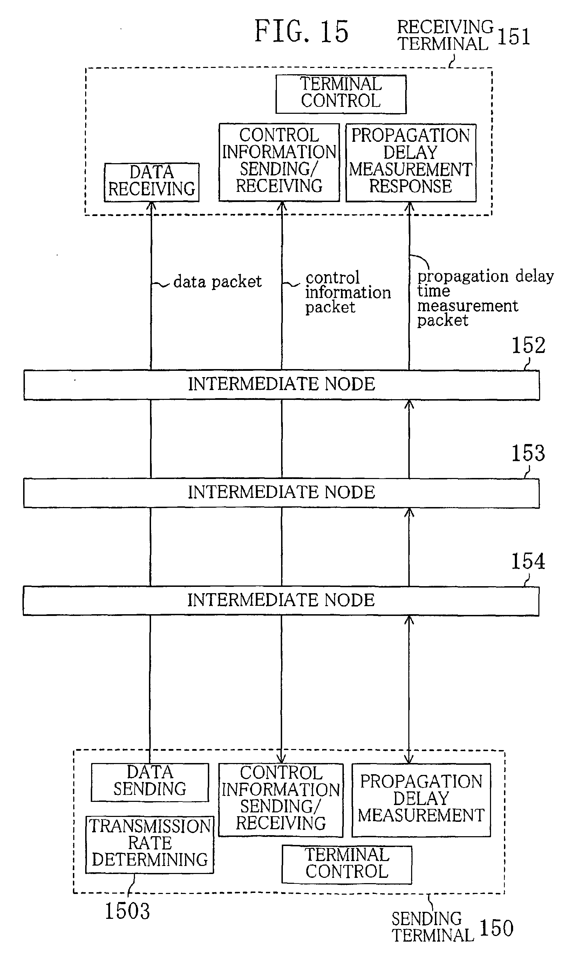

Fig. **15** is a schematic drawing representing the overall configuration according to the present embodiment. In Fig. **15,** a sending terminal **150** corresponds to the sending terminal **10** of Fig. **1** without the bandwidth information obtaining portion **103.** A receiving terminal **151** corresponds to the receiving terminal **11** of Fig. **1** without the bandwidth estimation response portion **113.** Intermediate nodes **152, 153,** and **154** are equivalent to the intermediate nodes **12** to **14** of Fig. **1.**

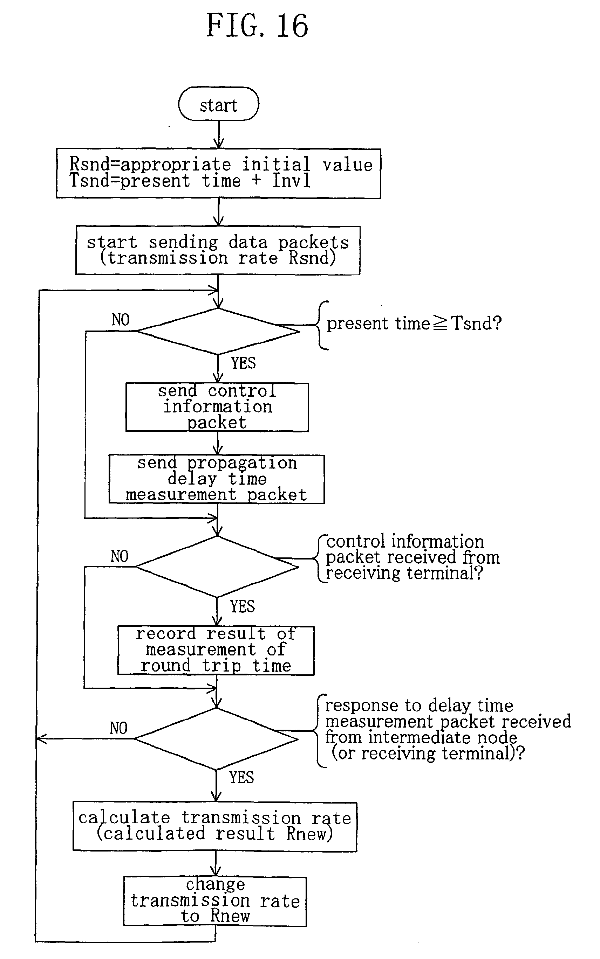

Fig. **16** is a flowchart illustrating the operation of the sending terminal **150** according to the present embodiment. Apart from the changes of removing the step for obtaining bandwidth information (step 200) and setting the initial value of the transmission rate to an appropriate value, Fig. **16** is not different from Fig. **2,** and therefore step numbers have been omitted.

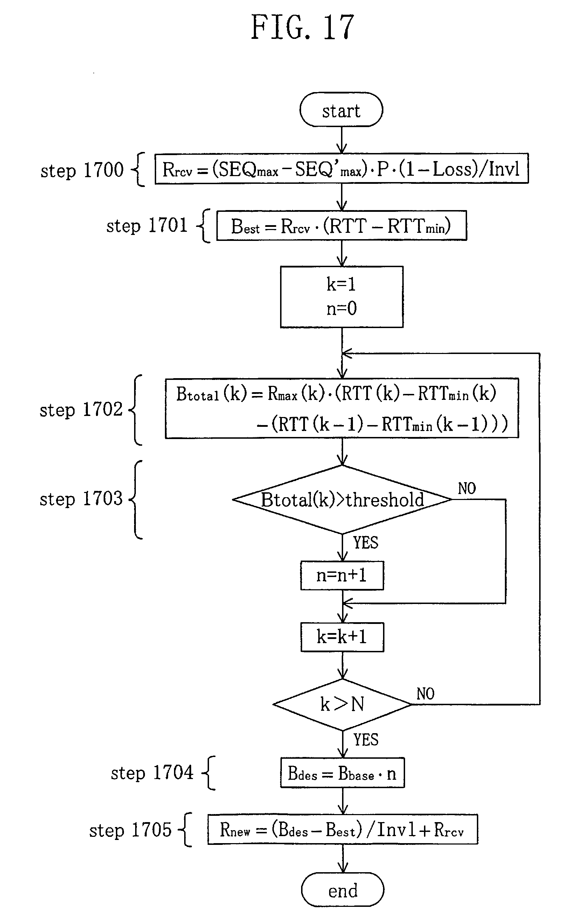

Fig. **17** is a flowchart illustrating the operation of the steps for determining the transmission rate in Fig. **16.** This operation is performed by a transmission rate determining portion **1503** in the sending terminal **150.** First, the reception rate $R_{rcv}$ of the receiving terminal **151** is calculated (step 1700). If the control information is sent using RTCP, then $R_{rcv}$ can be calculated by using the maximum sequence number $SEQ_{max}$, the packet loss rate Loss, and the send interval Invl between control information packets. $SEQ'_{max}$ is the maximum sequence number notified by the previous RTCP packet.

Next, the data amount $B_{est}$ that is residual on the transmission path between the sending terminal **150** and the receiving terminal **151** is calculated using the RTT between the sending terminal **150** and the receiving terminal **151** as well as the $R_{rcv}$ (step 1701). Here, $RTT_{min}$ represents the lowest value of the RTTs measured between the sending terminal **150** and the receiving terminal **151** up to that point.

Next, the total data amount $B_{total}(k)$, which includes other flows residual in the Node(k), is estimated from the round trip times RTT(k) and RTT(k-1) between the sending terminal **150** and the Nodes(k) and (k-1), and the link bandwidth $R_{max}(k)$ of the Node(k) (step 1702). Here, $RTT_{min}(k)$ represents the lowest value of the RTT measured between the sending terminal **150** and the Node(k) up to that point. If the data amount $B_{total}(k)$ is larger that the threshold value, then it is determined that data packets are residual in the Node(k), and if it is smaller than the threshold value, then it is determined that no data packets are residual in the Node(k) (step 1703).

Depending on this assessment, the number *n* of intermediate nodes regarded as having residual data packets is counted and the target data amount $B_{des}$ is calculated from the basic target data amount $B_{base}$ and *n* (step 1704). Lastly, the next transmission rate $R_{new}$ is determined such that the amount of residual data during the send time interval Invl of the control information from the receiving terminal **151** reaches $B_{des}$ (step 1705).

In step 1704, the target data amount was calculated using $B_{base}$ and *n*, but it is also possible to calculate it with the packet loss rate Loss by $B_{des}=B_{base}\times(1\text{-Loss})$.

*Fifth Embodiment*

The present embodiment relates to a scheme for switching the method for determining the transmission rate based on whether or not packet loss is occurring, and is primarily for solving the aforementioned fourth problem.

A schematic view representing the entire configuration of the present embodiment is equivalent to that of Fig. **1**. Also, the flowchart illustrating the operation of the sending terminal according to the present embodiment is equivalent to that of Fig. **2.**

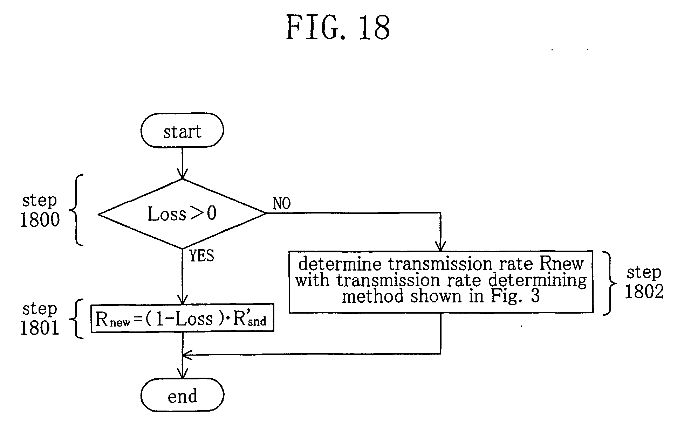

Fig. **18** is a flowchart representing the operation of the step for determining the transmission rate (step 205 in Fig. **2**) according to the present embodiment. First, whether packet loss is occurring is assessed based on the packet loss rate Loss of the control information packets (step 1800). If it is determined that there is packet loss, then the next transmission rate $R_{new}$ is determined based on the packet loss rate Loss and the previous transmission rate $R'_{snd}$ (step 1801). It should be noted that apart from the method illustrated in step 1801, it is also possible to have $R_{snd}=R'_{snd} \times$ (constant)(where the constant is a real number of at least 0 and at most 1) based on the previous transmission rate, or to use a rate control method based on the packet loss, such as DAA or LDA. When there is no packet loss, the method shown in Fig. **3** is used to determine the transmission rate $R_{new}$ (step 1802). In step 1802, apart from the method shown in Fig. **3** it is also possible to use the method shown in Fig. **17**, for example.

In step 1800, it is also possible to switch the transmission rate control method based on the transmission path or the delivery scheme currently in use, instead of switching the transmission rate control method depending on whether there is packet loss. This means that it is possible to have step 1801 performed in the case of Ethernet or multicasts, and step 1802 performed when using a transmission path with a large bandwidth gap for one-to-one communication.

*Sixth Embodiment*

The present embodiment relates to a bandwidth estimation method in which bandwidth estimation is performed using the control information channel and the data channel, and is primarily for solving the second problem mentioned above.

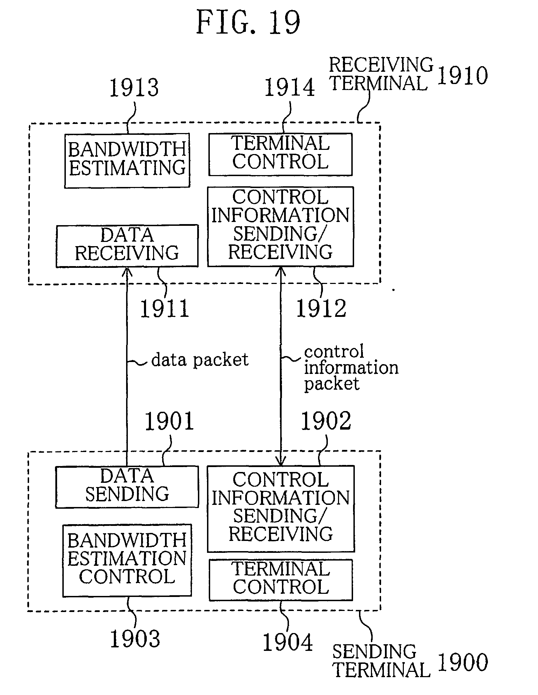

Fig. **19** is a schematic drawing showing the entire configuration according to the present embodiment. In a sending terminal **1900,** a data sending portion **1901** is a means for taking in data from inputs such as a capture, a microphone, or a file, encoding the data if necessary, packetizing the data if necessary, and sending data packets to a receiving terminal **1910.** Additionally, it is also a means for consecutively sending data packets without a send interval between the packets at the command of a bandwidth estimation control portion **1903.** It is presumed that a data transmission protocol such as RTP is used as the protocol for data transmission.

A control information sending/receiving portion **1902** is a means for exchanging with the receiving terminal **1910** control information pertaining to data packets sent from the sending terminal **1900.** Control information sent from the sending terminal **1900** to the receiving terminal **1910** includes information showing which data packets were sent for bandwidth estimation, and the information delivered from the receiving terminal **1910** to the sending terminal **1900** includes the results of the bandwidth estimation. As the protocol for transmission of the control information, it is possible to use TCP, but it is also possible to expand a data transmission control protocol such as RTCP.

The bandwidth estimation control portion **1903** is a means for instructing the data sending portion **1901** to consecutively send data packets for bandwidth estimation without a send interval between the packets. It is also a means for notifying the control information sending/receiving portion **1902** of the packets sent for bandwidth estimation (for example, the sequence number of the first and the last of the packets sent without a send interval if the data packets are sent using RTP).

A terminal control portion **1904** is a means for controlling the various portions of the sending terminal **1900.**

In the receiving terminal **1910,** a data receiving portion **1911** is a means for receiving data packets sent from the sending terminal **1900,** unpacking the packets if necessary, decoding the packets if necessary, and delivering the data to an output such as a monitor, a speaker, or a file.

A control information sending/receiving portion **1912** is a means for sending/receiving control information regarding the sent data packets to and from the sending terminal **1900.**

A bandwidth estimating portion **1913** is a means for measuring the interval of the arrival of bandwidth estimation packets based on information indicating the bandwidth estimation packets which are received by the control information sending/receiving portion **1912.** It is also a means for estimating the transmission bandwidth based on this arrival interval, and notifying the results to the control information sending/receiving portion **1912.**

A terminal control portion **1914** is a means for controlling the various portions of the receiving terminal **1910.**

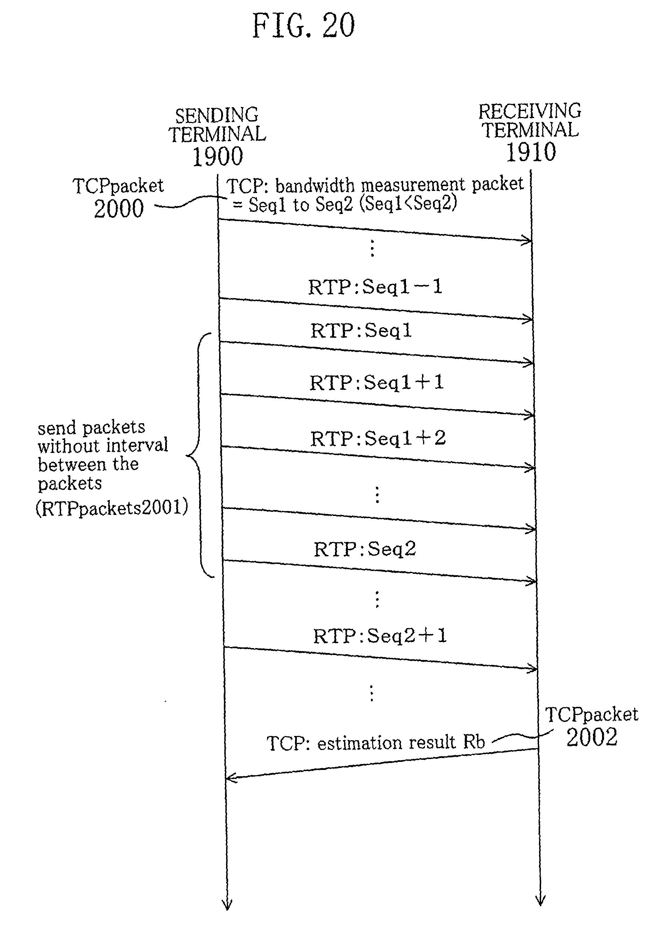

Fig. **20** is a sequence diagram between the sending terminal **1900** and the receiving terminal **1910** when bandwidth estimation is performed in a case in which TCP is used as the protocol for control information transmission and RTP is used as the protocol for transmission of the data packets.

The sending terminal **1900** first sends a control information packet for indicating which data packets are for bandwidth estimation (TCP packet 2000). In Fig. **20,** the data packets that are used are those between Seq1 and Seq2. Then, data packets for bandwidth estimation are sent consecutively at a specific time interval (RTP packets 2001). The specific time interval should be set to an interval that is short enough that on the transmission path other packets are not interspersed between the packets for bandwidth estimation (naturally, this includes zero seconds). The receiving terminal **1910** measures the arrival interval *delta* of the bandwidth estimation packets that are notified from the sending terminal **1900,** and in accordance with this measurement estimates the bandwidth of the bottleneck link $R_b$=P/(average value of *delta*), wherein P is the packet size of the data packets. The receiving terminal **1910** sends the results of the measurement using a control information packet (TCP packet 2002).

*Seventh Embodiment*

The present embodiment pertains to a bandwidth estimation scheme in which the data packets are given a bandwidth estimation flag, and is primarily for solving the above mentioned second problem.

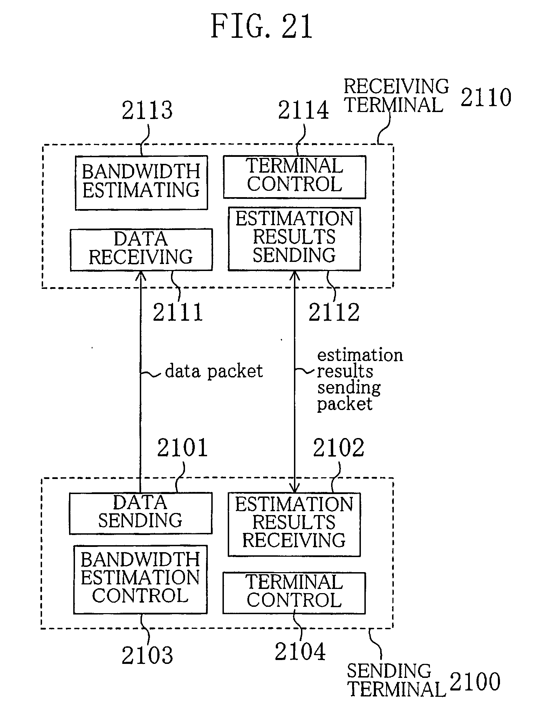

Fig. **21** is a schematic drawing representing the overall configuration according to the present embodiment. In a sending terminal **2100,** a data sending portion **2101** is a means for taking data from an input such as a capture, a microphone, or a file, encoding the data if necessary, packetizing the data if necessary, and transmitting the data packets to a receiving terminal **2110.** It is also a means for consecutively sending data packets without a send interval between the packets as instructed by a bandwidth estimation control portion **2103.** Furthermore, it is also a means for setting a bandwidth estimation flag to data packets sent as bandwidth estimation packets so as to indicate that they are bandwidth estimation packets. It is presumed that a data transmission protocol such as RTP is used as the protocol for the transmission of data. For the bandwidth estimation flag, it is possible to use an existing field in the data packet header, such as the marker bit field of RTP or the extension bit field, or to extend the RTP packets to define a new field, or to input the flag into the payload. It is possible to set the bandwidth estimation flag in all of the packets that are sent as bandwidth estimation packets, or to set it in only the first and last of the packets that are sent as bandwidth estimation packets.

An estimation results receiving portion **2102** is a means for receiving the results of the bandwidth estimation from the receiving terminal **2110**. It is assumed that the protocol for sending/receiving the estimation results is a data transmission control protocol such as RTCP.

A bandwidth estimation control portion **2103** is a means for instructing the data sending portion **2101** to consecutively transmit, without packet intervals, data packets serving as bandwidth estimation packets.

A terminal control portion **2104** is a means for controlling the various portions of the sending terminal **2100.**

In the receiving terminal **2110,** a data receiving portion **2111** is a means for receiving data packets sent from the sending terminal **2100,** unpacking the packets if necessary, decoding if necessary, and delivering the data to an output such as a monitor, a speaker, or a file.

An estimation results sending portion **2112** is a means for sending the bandwidth of the bottleneck link that has been estimated by a bandwidth estimating portion **2113** to the sending terminal **2100.** It is assumed that the protocol for sending/receiving the estimation results is a data transmission control protocol such as RTCP.

The bandwidth estimating portion **2113** is a means for checking the bandwidth estimation flag of the data packets. Additionally, when the bandwidth estimation flag is set, it is also a means for measuring the arrival interval *delta* of the data packets, and in accordance with those results estimating the bandwidth of the bottleneck link, $R_b$=P/ (average value of *delta*), where P is the packet size of the data packets, and notifying the results of the estimation to the estimation results sending portion **2112.** At this time, if packet loss due to jumps in the sequence number Seq of the RTP packets is detected, the arrival interval *delta* between the sequence numbers Seq-1 and Seq+1 are not included in the results of the measurement. This is to eliminate errors in the estimation caused by packet loss.

A terminal control portion **2114** is a means for controlling the various portions of the receiving terminal **2110.**

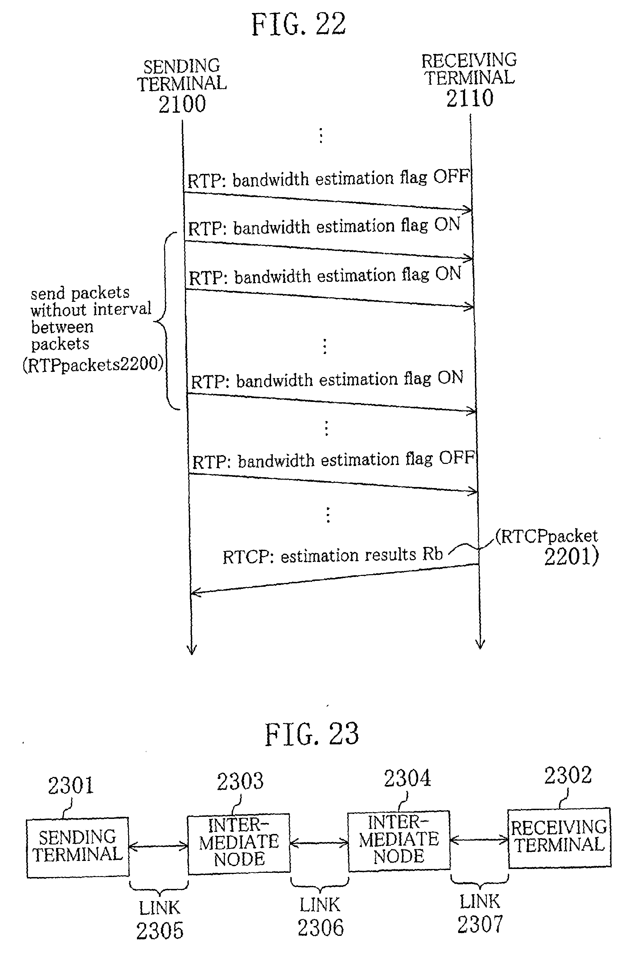

Fig. **22** is a sequence diagram between the sending terminal **2100** and the receiving terminal **2110** when bandwidth estimation is performed in a case in which RTP is used for sending data packets and RTCP is used for sending the estimation results. First, the sending terminal **2100** sends data packets without a send interval as packets for bandwidth estimation (RTP packets 2200). At this time, the bandwidth estimation flag for indicating that a packet is for bandwidth estimation is set in the data packets. The receiving terminal **2110** receives the data packets and checks the bandwidth estimation flag in the data packets. If the bandwidth estimation flag has been set, then the receiving terminal **2110** measures the arrival interval of the packets and with those results estimates the bandwidth of the bottleneck link. The receiving terminal **2110** sends the results of this estimation to the sending terminal **2100** (RTCP packet 2201).

It should be noted that in the present embodiment, if one wishes to estimate the bandwidth $R_b$ of the bottleneck link before sending the data packets, or if one does not wish to use the data packets as bandwidth estimation packets, it is also possible to send data packets not including data in their payload as bandwidth measurement packets, to measure only the arrival interval of these bandwidth estimation packets at the receiving terminal **2110,** and then discard the packets.

Additionally, in the present embodiment it is also possible to use a bandwidth estimation sequence number representing the number of sent bandwidth estimation packets instead of a bandwidth estimation flag. In this situation, the arrival interval is not measured if the bandwidth estimation sequence number is 0, and the arrival interval is measured if that number is other than 0. Moreover, packet loss can be detected by jumps in the bandwidth estimation sequence number, and by not using the packets before and after a lost packet to measure the arrival interval it is possible to eliminate errors in the estimation due to packet loss.

*Eighth Embodiment*

The present embodiment relates to a bandwidth estimation method with end conditions, and is primarily for solving the aforementioned first problem.

Fig. **23** is a schematic drawing illustrating the overall configuration according to the present embodiment. In Fig. **23**, a sending terminal **2301** sends packets for bandwidth estimation to intermediate nodes **2303** and **2304** on the route to a receiving terminal **2302**. The packets for bandwidth estimation are for measuring the RTT between the sending terminal **2301** and the intermediate nodes **2303** and **2304** on the route. For example, if the network is an IP network, sending an IP packet in which the TTL field is set to n permits the transmission of a TTL expired message with an ICMP packet to the *n*-th intermediate node on the route, and thereby permits measurement of the RTT to and from the intermediate nodes.

The receiving terminal **2302** sends a response to the packets for bandwidth estimation that have been sent from the sending terminal **2301**. For example, if the network is an IP network, the receiving terminal **2302** sends response PING packets with respect to PING packets from the sending terminal **2301**. The receiving terminal **2302** is the end of the route for which the sending terminal **2301** measures the bandwidth.

The intermediate nodes **2303** and **2304** send a response to the packets for bandwidth estimation that have been sent from the sending terminal **2301**. For example, if the network is an IP network, when the sending terminal **2301** sends IP packets in which the TTL field has been set to *n*, the *n*-th node on the route sends a TTL Expired message with ICMP packets to the sending terminal **2301**.

Links **2305, 2306,** and **2307** are networks such as an Ethernet or SLIP (Serial Line Internet Protocol) connecting the sending terminal **2301**, the receiving terminal **2302**, and the intermediate nodes **2303** and **2304**. In the present embodiment, the bandwidth of these links is measured.

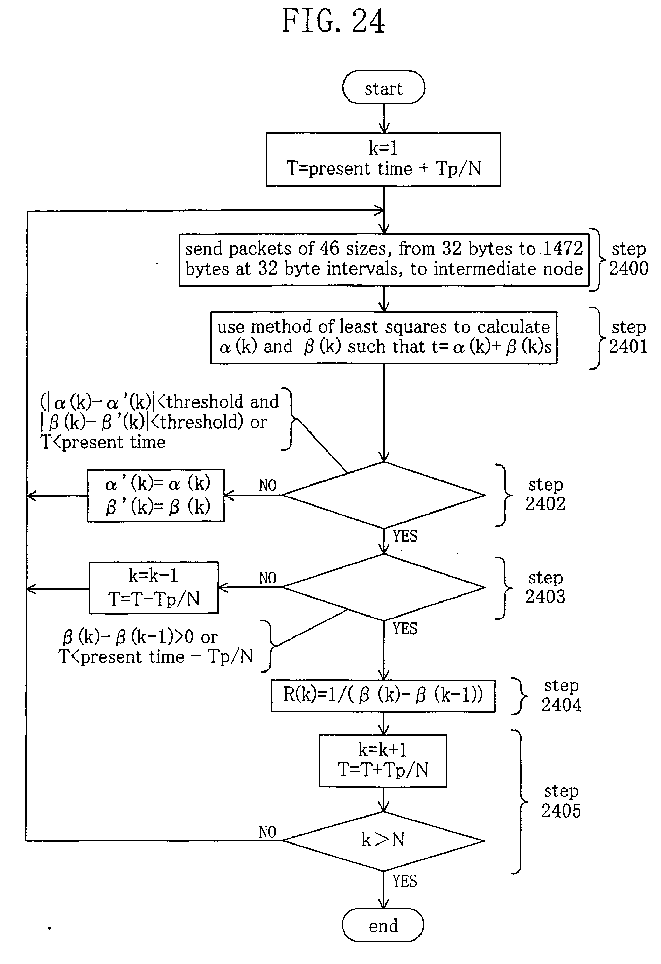

Fig. **24** is a flowchart illustrating the operation of the sending terminal **2301** when performing bandwidth estimation. The sending terminal **2301** estimates the bandwidth of the links in order from the link closest to the sending terminal **2301**. Specifying the measurement time $T_p$ of all the links and assuming that there are N links between the sending terminal **2301** and the receiving terminal **2302,** the bandwidth of the k-th link from the sending terminal is estimated as follows.

First, packets of **46** sizes at 32 byte intervals from 32 bytes to 1472 bytes are sent to the intermediate node **2303** (step 2400). Next, when *s* is the packet size, and *t* is the minimum RTT, $\alpha(k)$ and $\beta(k)$ are determined using the method of least squares such that

$$t = \alpha(k) + \beta(k)s$$

(step 2401). It should be noted that to obtain more precise results with fewer measured points, it is also possible to use another statistical process such as M estimation or weighted least squares.

The results of the calculation of $\alpha(k)$ and $\beta(k)$ are compared with $\alpha'(k)$ and $\beta'(k)$, which have been obtained from the results of the previous trial, and if the change is within the range of the threshold value, the results are determined to be convergent. However, also if the estimation end time T of the k-th node has passed, then the results are determined to be convergent. The estimation end time of the k-th node is given as (estimation start time)+k$\times$Tp/N (step 2402).

If it is determined that the results are not convergent, then the steps 2400 and 2401 are repeated one more time. For determining convergence, it is also possible to compare to a plurality of past trial results, instead of to only the previous trial results, to determine whether the change is within the range of the threshold value.

In step 2402, if it has been determined that $\alpha(k)$ and $\beta(k)$ are convergent, then $\beta(k)$ and $\beta(k-1)$ are compared. If $\beta(k)$ is smaller than $\beta(k-1)$ then the estimated bandwidth becomes negative, and therefore this means that there is an error in one of either $\beta(k-1)$ or $\beta(k)$. To correct this error, if measurement time is remaining, then the procedure returns to the previous hop and the measurement is redone (step 2403).

If $\beta(k)$ is larger than $\beta(k-1)$ or if the measurement time has expired, then it is determined that the measurement was correct and the bandwidth of the link is determined (step **2404**). Then, if there is a next hop, then the sending terminal 2301 proceeds to bandwidth estimation of the next hop, and the process is finished when the final hop has been reached (step 2405).

*Ninth Embodiment*

The present embodiment relates to a method for ensuring the quality of the transmission by securing a minimum bandwidth at an intermediate node (for example a router or a gateway), and is primarily for solving the aforementioned sixth problem.

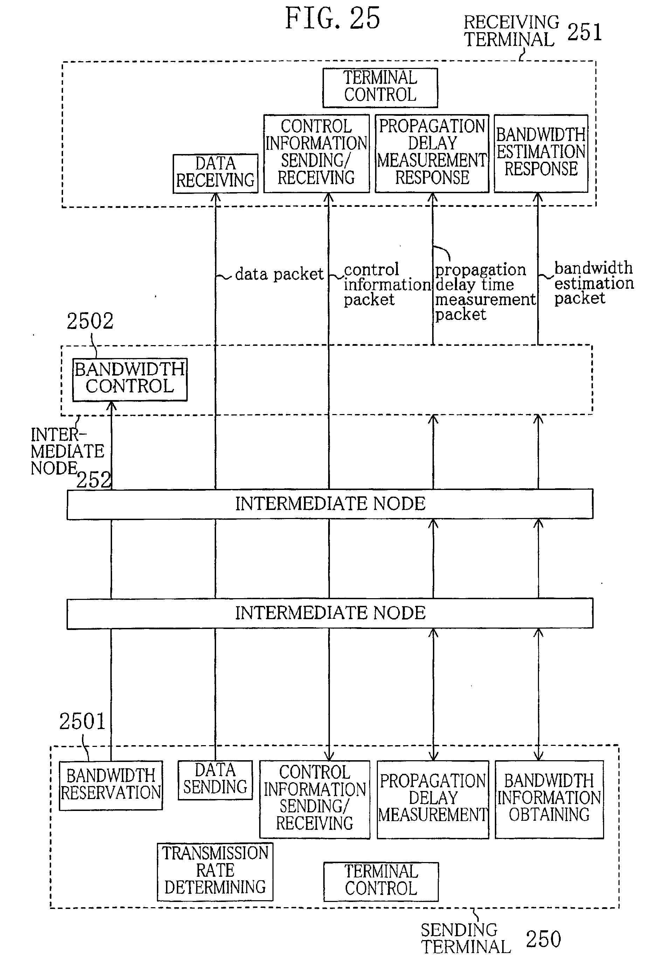

Fig. **25** is a schematic drawing representing the overall configuration according to the present embodiment. A sending terminal **250** is a sending terminal in which a bandwidth reserving portion **2501** has been added to the sending terminal **10** shown in Fig. **1**. An intermediate node **252** interposed between the sending terminal **250** and a receiving terminal **251** is an intermediate node in which a bandwidth control portion **2502** has been added to the intermediate node **12** shown in Fig. **1.**

The bandwidth reserving portion **2501** is a means for notifying the intermediate node **252** of the minimum transmission rate and the maximum transmission rate that can be sent by the sending terminal **250.** Additionally, it is also a means for receiving the results of whether bandwidth can be ensured at the notified transmission rate.

The bandwidth control portion **2502** is a means for reserving the transmission bandwidth at the lowest transmission rate notified from the sending terminal **250.** Moreover, it is also a means for notifying the sending terminal **250** that the transmission bandwidth cannot be ensured in a case in where the transmission bandwidth reservation is impossible.

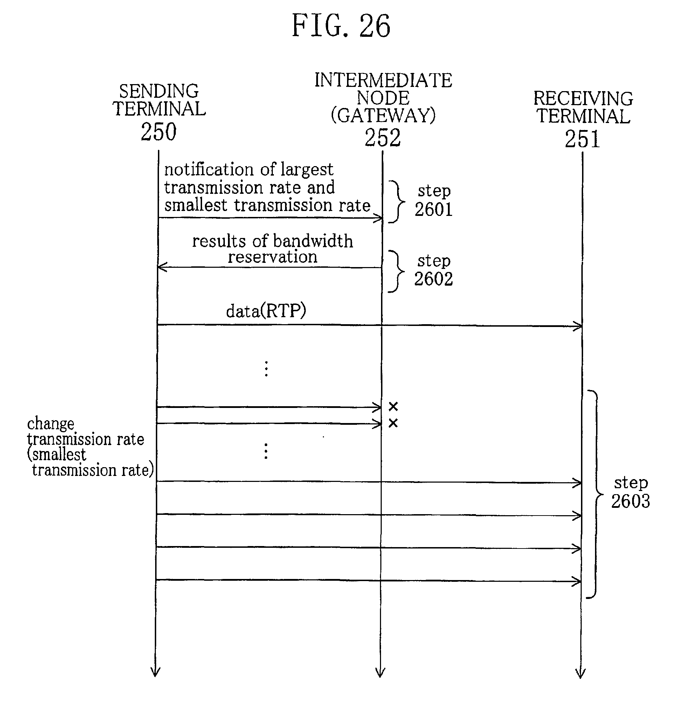

Fig. **26** is a sequence diagram illustrating how the present embodiment operates. Before transmitting data, the sending terminal **250** notifies the intermediate node **252** of the smallest transmission rate and the largest transmission rate that can be sent by the sending terminal **250** (step 2601). The intermediate node **252** reserves transmission bandwidth at the notified transmission rates and notifies the sending terminal **250** that the reservation has been made (step 2602). The sending terminal **250** confirms that the transmission bandwidth has been reserved, and starts the transmission of data. At this time, the sending terminal **250** determines the transmission rate with the method described in either the first or second embodiment from the control information packets or the RTT between itself and the intermediate node **252**, for example, and transmits data at the determined transmission rate. If there is exceptionally severe congestion and the transmission rate decreases to its minimum value, then, it is possible to ensure a minimum transmission quality, because the transmission bandwidth has been reserved with the intermediate node **252** (that is, due to the bandwidth reservation, packet loss does not occur), and video without disturbances or audio transmission with few breaks can be achieved (step 2603).

It should be noted that in the present embodiment, the sending terminal **250** reserved the transmission bandwidth by notifying the required transmission bandwidth, but the present invention can also be worked without the transmission bandwidth being notified from the sending terminal **250.** For example, it is also possible to apply the present invention when the minimum transmission rate of the sending terminal **250** has been determined and the administrator establishes the reserved bandwidth at the intermediate terminal **252** in advance. Furthermore, the present invention can also be applied when the transmission bandwidth that can be used for the transmission of data by the intermediate node **252** is reserved, the reserved bandwidth is notified to the sending terminal **250,** and the sending terminal **250** determines the transmission rate in accordance with that reserved transmission bandwidth. Here, the transmission bandwidth that can be used for the transmission of data by the intermediate node **252** can also be based on the type of data that is sent by the intermediate node **252.**

It is moreover possible that the receiving terminal **251** notifies the intermediate node **252** of the minimum transmission rate requested of the sending terminal **250,** and the intermediate node **252** performs reservation. This reservation method is effective for reflecting the minimum video quality requested by the receiving terminal **251** in the transmission.

Additionally, the receiving terminal **251** buffers data every several seconds so as to absorb fluctuations in the network before reproducing data, and by letting the receiving terminal **251** have a minimal buffer of (buffering time) $\times$ (minimum transmission rate), it is possible to achieve video without disturbances or audio transmission with few breaks.

*Tenth Embodiment*

The present embodiment relates to a method for ensuring video quality by prioritizing the transmission of control packets, and is primarily for solving the aforementioned seventh problem.

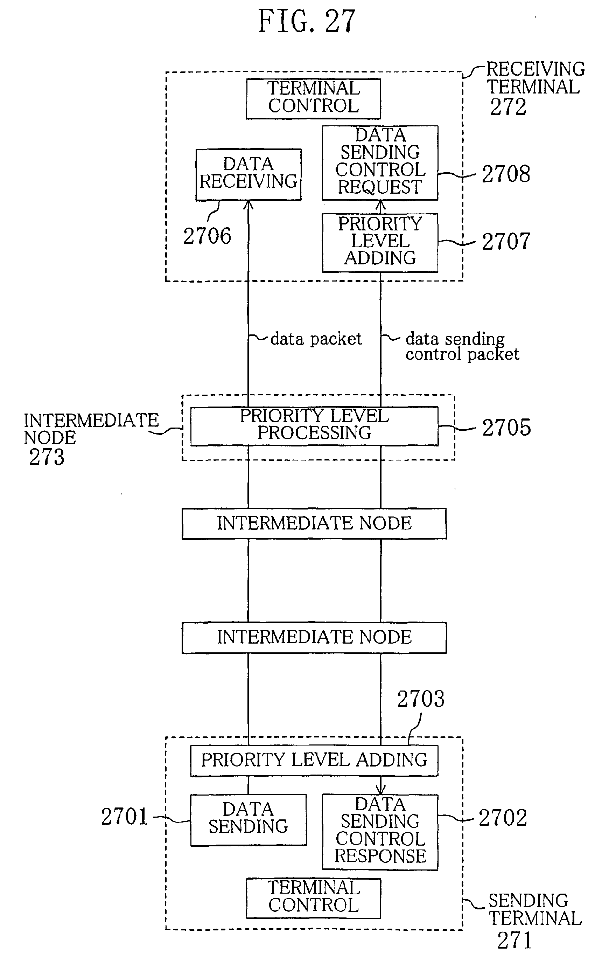

Fig. **27** is a schematic view illustrating the overall configuration according to the present embodiment. In a sending terminal **271,** a data sending portion **2701** and a data transmission control response portion **2702** are equivalent to the data sending portion **601** and the data transmission control response portion **602,** respectively, shown in Fig. **6.** In a receiving terminal **272,** a data receiving portion **2706** and a data sending control request portion **2708** are equivalent to the data receiving portion **605** and the data sending control request portion **606,** respectively, depicted in Fig. **6.**

In Fig. **27,** priority level adding portions **2703** and **2707** are means for adding, to the packets sent across the network, a high priority level to control packets and a low priority level to data packets. An example of a method for adding priority level is to enter priority level information into the TOS field of IP packets.

A priority level processing portion **2705** disposed in an intermediate node **273** is a means for priority processing packets assigned a high priority level. With the priority level processing portion **2705**, packets assigned a high priority level are discarded at a low rate and transmitted with low latency to the receiving terminal **272.** DiffServ can be used as the method for priority level processing.

The above configuration permits the low latency and lossless transmission of control packets and enables the transmission of data packets to be started and stopped reliably and with low latency, even when there is congestion.

It should be noted that applying the above configuration to TCP makes it possible for TCP sessions to be established and disconnected reliably and with low latency. For example, setting the priority level such that control packets (SYN, PIN packets) are discarded at a low rate enables the reliable and low latency establishment and disconnection of the TCP session.

Of course, this method can be applied not only in one-to-one communication between a terminal and a server but also in one-to-many communication (multicast) in which broadcasts are made to a plurality of terminals.

The first through tenth embodiments according to the present invention are as explained above, but it goes without saying that the present invention also encompasses a sending device, a receiving device, and a sending/receiving system provided with these for realizing the data sending/receiving method of the present invention.

The present invention can be a program for executing with a computer the functions of some or all of the means (or devices, elements, circuits, parts, etc.) of the above-mentioned sending device, the receiving device, and sending/receiving system according to the present invention, which operates in cooperation with a computer. It should be noted that a computer according to the present invention is not limited to pure hardware such as a CPU, and can also include firmware or an OS (operating system), as well as peripheral devices.

The present invention also can be a program for executing with a computer the operations of some or all of the steps (or processes, operations, actions, etc.) of the data sending/receiving method according to the present invention, in cooperation with a computer.

Furthermore, a computer-readable storage medium onto which the program of the present invention is stored is also encompassed by the present invention. Also, one mode for the use of the program according to the present invention is to store it on a computer-readable storage medium and to operate it in cooperation with the computer to operate. A further mode for the use of the program according to the present invention is to transmit it through a transmission medium, read it with by a computer and then operate it in cooperation with the computer. Furthermore, examples of the storage medium include ROM (Read Only Memory), and examples of the transmission medium include transmission media such as the Internet, as well as light, electromagnetic waves, and acoustic waves.

The configuration of the present invention can be achieved by software or hardware.

INDUSTRIAL APPLICABILITY

With the present invention, it is possible to perform an efficient transmission of data with a stable transmission quality over a transmission path like the Internet in which there are various connection modes and fluctuations in the transmission bandwidth. In particular, by applying the present invention to connection modes with mixed wired networks and wireless networks, in which it has conventionally been difficult to perform data transmission with a stable transmission quality, it becomes possible to perform an efficient transmission of data with a stable transmission quality in a wide array of applications, such as Internet TV telephone, VoD, broadcasts (multicasts), and video billboards.

**Claims**

1. A data sending/receiving method, wherein a transmission rate from a sending terminal is determined in accordance with a state of receiving and/or sending of data in all or a portion of intermediate nodes provided on a transmission path between the sending terminal and a receiving terminal.

2. The data sending/receiving method according to claim 1, wherein the transmission rate from the sending terminal is determined in accordance with at least one of a round trip time between all or a portion of the intermediate nodes and the sending terminal, fluctuation in the round trip time, packet loss at the intermediate nodes, a bandwidth of a link of the intermediate nodes, and past transmission rates.

3. The data sending/receiving method according to claim 2, wherein, for obtaining at least one information of the round trip time, the fluctuation in the round trip time, and the packet loss at the intermediate nodes with sending terminals, the sending terminals capable of obtaining the information are restricted by the intermediate nodes.

4. The data sending/receiving method according to claim 1, wherein
the transmission path has a wired section and a wireless section;
at least one of the intermediate nodes is a gateway which connects the wired section and the wireless section; and
the transmission rate from the sending terminal is determined in accordance with a state of the receiving and/or sending of data at intermediate nodes including the gateway.

5. The data sending/receiving method according to claim 4, wherein the transmission rate from the sending terminal is determined in accordance with at least one of a round trip time, a fluctuation in the round trip time, and packet loss, excluding the influence of the wireless section.

6. The data sending/receiving method according to claim 1, wherein the bandwidths of all or a portion of the links on the transmission path are measured before data is sent.

7. The data sending/receiving method according to claim 1, wherein a bandwidth of a link with a smallest transmission bandwidth on the transmission path is taken as an initial value of the transmission rate of data sent to the receiving terminal by the sending terminal.

8. The data sending/receiving method according to claim 1,
   wherein a transmission bandwidth usable by the intermediate nodes is reserved; and
   wherein the transmission rate is determined in accordance with the reserved transmission bandwidth.

9. The data sending/receiving method according to claim 8, wherein the transmission bandwidth usable for the receiving and/or sending of data by the intermediate nodes is based on the type of data to be received and/or sent by the intermediate nodes.

10. A data sending/receiving method, comprising:

   a step in which, if congestion has occurred at an intermediate node, the intermediate node adds congestion information indicating that congestion has occurred to data and sends the data to a receiving terminal;
   a step in which the receiving terminal determines a transmission rate in accordance with the congestion information and requests a sending terminal to change the transmission rate; and
   a step in which the sending terminal changes the data transmission rate in accordance with the request.

11. A data sending/receiving method, in which a plurality of bandwidth estimation packets are sent at a specific interval from a sending terminal over a transmission path between the sending terminal and a receiving terminal, and the arrival interval between the packets is measured at the receiving terminal to estimate a maximum usable bandwidth on the transmission path, wherein:

   a portion of data packets sent from the sending terminal are used as the bandwidth estimation packets;
   information expressing which data packets of the sent data packets were sent for bandwidth estimation is marked in these sent data packets or sent independently to the receiving terminal; and
   results of the measurement at the receiving terminal are sent to the sending terminal.

12. A data sending/receiving method, wherein during congestion, packets including information regarding control for sending/receiving of data are sent with higher priority than data packets.

13. A sending device, comprising:

   a measurement means for measuring a state of receiving and/or sending of data in all or a portion of intermediate nodes provided on a transmission path between a sending terminal and a receiving terminal; and
   a transmission rate determining means for determining the transmission rate from the state of receiving and/or sending.

14. The sending device according to claim 13, wherein the measurement means measures a propagation delay time or a fluctuation in the propagation delay time, between all or said portion of intermediate nodes and the sending terminal.

15. A receiving terminal, comprising:

   a means for obtaining a transmission rate that can be sent by a sending terminal;
   a means for detecting congestion information added to a data packet;
   a means for determining a transmission rate in accordance with the congestion information; and

a means for requesting the sending terminal to change the data transmission rate based on the determined transmission rate.

**16.** A sending device for realizing any one of the data sending/receiving methods according to claims 1 to 12.

**17.** A receiving device for realizing any one of the data sending/receiving methods according to claims 1 to 12.

**18.** A sending/receiving system, comprising:

a sending device for realizing any one of the data sending/receiving methods according to claims 1 to 12; and
a receiving device for realizing any one of the data sending/receiving methods according to claims 1 to 12.

**19.** A program for realizing any one of the data sending/receiving methods according to claims 1 to 12.

## FIG. 1

RECEIVING
TERMINAL 11

114 ~ TERMINAL
CONTROL

112

113

110
DATA
RECEIVING

CONTROL
INFORMATION
SENDING/
RECEIVING

PROPAGATION
DELAY
MEASUREMENT
RESPONSE

BANDWIDTH
ESTIMATION
RESPONSE

111

~ data packet

~ control
information
packet

propagation
delay time
measurement
packet

bandwidth
estimation
packet

12

INTERMEDIATE NODE

13

INTERMEDIATE NODE

14

INTERMEDIATE NODE

100

101

102

103

DATA SENDING

TRANSMISSION
RATE
DETERMINING

CONTROL
INFORMATION
SENDING/
RECEIVING

PROPAGATION
DELAY
MEASUREMENT

BANDWIDTH
INFORMATION
OBTAINING

TERMINAL
CONTROL

104

105

SENDING
TERMINAL 10

# FIG. 2

```
                        ( start )
                           │
                           ▼
step 200  {        ┌──────────────────┐
                   │ obtain bandwidth │
                   │   information    │
                   └──────────────────┘
                           │
                           ▼
step 201  {   ┌────────────────────────────────┐
              │ Rsnd=smallest link bandwidth   │
              │ Tsnd=present time + Invl        │
              └────────────────────────────────┘
                           │
                           ▼
step202   {   ┌────────────────────────────────┐
              │  start sending data packets    │
              │     (send rate Rsnd)           │
              └────────────────────────────────┘
                           │
                           ▼
              ◄─NO──◇─────────────◇   { present time ≧ Tsnd?
                           │
                          YES
                           ▼
step 203  {        ┌──────────────────┐
                   │   send control   │
                   │ information packet│
                   └──────────────────┘
                           │
                           ▼
                   ┌──────────────────┐
                   │ send propagation │
                   │    delay time    │
                   │ measurement packet│
                   └──────────────────┘
                           │
                           ▼                      ⎰ control information packet
              ◄─NO──◇─────────────◇               ⎱ received from receiving
                           │                        terminal?
                          YES
                           ▼
step 204  {        ┌──────────────────┐
                   │ record result of │
                   │  measurement of  │
                   │ round trip time  │
                   └──────────────────┘
                           │
                           ▼                      ⎰ response to delay time
              ◄─NO──◇─────────────◇               ⎱ measurement packet
                           │                        received from intermediate
                          YES                       node (or receiving terminal)?
                           ▼
step 205  {   ┌────────────────────────────────┐
              │ calculate transmission rate    │
              │   (calculated result Rnew)     │
              └────────────────────────────────┘
                           │
                           ▼
                   ┌──────────────────┐
                   │change transmission│
                   │   rate to Rnew   │
                   └──────────────────┘
```

# FIG. 3

start

$k = 1$

step 300 $\{$ $B_{total}(k) = R_{max}(k) \cdot (RTT(k) - RTT_{min}(k) - (RTT(k-1) - RTT_{min}(k-1)))$

step 301 $\{$ $B_{total}(k) > threshold$  NO

YES

step 303 $\{$

$B_{snd}(k) = R_{snd}(k) \cdot Inv1$

$B_{other}(k) = B_{total}(k) - B'_{total}(k)$
$\qquad - B_{snd}(k) + R_{max}(k) \cdot Inv1$

step 304 $\{$ $B_{est}(k) = \dfrac{B_{total}(k) \cdot B_{snd}(k)}{B_{other}(k) + B_{snd}(k)}$

step 305 $\{$ $R_{out}(k) = \dfrac{B_{total}(k) \cdot R_{max}(k)}{B_{other}(k) + B_{snd}(k)}$

step 306 $\{$ $R_{in} = (B_{est}(k) - B_{des})/Inv1 + R_{out}(k)$

$i = k - 1$ $\qquad$ $R_{out}(k) = R_{out}(k-1)$ $\}$ step 302

$i \leqq 0$  NO

YES

NO  $B_{total}(k) > threshold$

YES

$R_{new}(k) = R_{in}$

step 307 $\{$ $R_{in} = \dfrac{R_{tmp} \cdot B_{ohter}(i)}{(R_{max}(i) - R_{tmp}) \cdot Inv1}$

$i = i - 1$

$k = k + 1$

$k > N$  NO

YES

$R_{new} = $ (smallest transmission rate of $R_{new}(l)(1 \leqq l \leqq N)$) $\}$ step 308

end

# FIG. 4

401    WIRED NETWORK    402    WIRELESS NETWORK    403

404            405

| SENDING TERMINAL | ← → | GATEWAY | ← → | RECEIVING TERMINAL |

# FIG. 5

WIRED NETWORK      WIRELESS NETWORK      WIRED NETWORK

| SENDING TERMINAL | ← → | GATEWAY | ← → | GATEWAY | ← → | RECEIVING TERMINAL |

# FIG. 8

```
...
<switch>
 <video src="stream2" system-bitrate="64000" />        ～ 801
 <video src="stream1" system-bitrate="128000" />       ～ 802
</switch>
 ...
```

# FIG. 6

# FIG. 7

SENDING
TERMINAL
60

INTERMEDIATE NODE
(GATEWAY)
62

RECEIVING
TERMINAL
61

data information obtain request (HTTP GET)

data information obtain response (SMIL/HTTP)
} step 701

RTSP SETUP (Stream1)

RTSP SETUP OK

RTSP SETUP (Stream2)

RTSP SETUP OK
} step 702

RTSP PLAY (Stream1)

RTSP PLAY OK

RTP packet
} step 703

RTP packet (ECN mark ON)

RTP packet (ECN mark ON)

RTP packet (ECN mark ON)

RTP packet (ECN mark ON)
} step 704

RTSP PAUSE (Stream1)

RTSP PAUSE OK

RTSP PLAY (Stream2)

RTSP PLAY OK
} step 705

RTP packet

## FIG. 9

```
                    ( start )
                        |
┌─────────────────────────────────┐
│      record transmission rate    │ }  step 901
│   Rsnd(j)(1≦k≦N) that can be      │
│      sent by sending terminal    │
└─────────────────────────────────┘
                        |
┌─────────────────────────────────┐
│      request data to be sent at  │ }  step 902
│   transmission rate R(k)(1≦k≦N)  │
└─────────────────────────────────┘
                        |
                 ┌──────────┐
                 │   i=0    │
                 └──────────┘
                        |
          ┌──────────────────────┐
          │  receive data packet │
          └──────────────────────┘
                        |
              ┌──────────────┐
              │   i=i+1      │         } step
              │   R=R(k)     │           903
              └──────────────┘
                        |
     ┌────────────────────────────────────┐
     │ E(i)=value of ECN flag in data packet │
     │        (ECN ON=1/OFF=0)            │
     └────────────────────────────────────┘
```

$$M(i) = \sum_{l=i-N+1}^{i} E(l)$$

$$L(i) = M(i)/N$$

(present time)$-T<I'$ ◇ — YES

NO

$M(i-1)=0$ and $M(i)\neq 0$ ◇ — YES → $R=R-\alpha$  } step 904

NO

$L(i)>\beta$ ◇ — YES → $R=R\times(1-L(i))$  } step 905
$T=$(current time)

NO

find $\gamma$ and $\delta$ satisfying
$M(i)\fallingdotseq \gamma \times i + \delta$

(present time)$-T'>I'$ and
$\gamma>$threshold ◇ — YES → $R=R\times C/\gamma$  } step 906
$T'=$(present time)

NO

(present time)$-T'>I''$ and
(present time)$-T''>I''$
and $M(i)<\theta$ ◇ — YES → $R=R+\alpha'$  } step 907
$T''=$(present time)

NO

determine Rsnd(j) closest
to R as transmission rate  } step 908

FIG. 10

WIRELESS
NETWORK

RECEIVING
TERMINAL

RECEIVING
TERMINAL

WIRED
NETWORK

SENDING
TERMINAL

GATEWAY

·
·
·

RECEIVING
TERMINAL

FIG. 11

WIRELESS
NETWORK

RECEIVING
TERMINAL

RECEIVING
TERMINAL

GATEWAY

·
·
·

RECEIVING
TERMINAL

WIRED
NETWORK

WIRELESS
NETWORK

RECEIVING
TERMINAL

RECEIVING
TERMINAL

WIRED
NETWORK

SENDING
TERMINAL

GATEWAY

·
·
·

RECEIVING
TERMINAL

WIRED
NETWORK

·
·
·

WIRELESS
NETWORK

RECEIVING
TERMINAL

RECEIVING
TERMINAL

GATEWAY

·
·
·

RECEIVING
TERMINAL

# FIG. 12

RECEIVING TERMINAL 122

TERMINAL CONTROL

| GROUP CHANGING | DATA RECEIVING | CONTROL INFORMATION SENDING/ RECEIVING | PROPAGATION DELAY MEASUREMENT RESPONSE | BANDWIDTH ESTIMATION RESPONSE |

1202

~group notification packet  ~data packet  ~control information packet  propagation delay time measurement packet  bandwidth estimation packet

INTERMEDIATE NODE (GATEWAY)

INTERMEDIATE NODE

INTERMEDIATE NODE

1201          1203          1204

| GROUP DETERMINING | DATA SENDING | CONTROL INFORMATION SENDING/ RECEIVING | PROPAGATION DELAY MEASUREMENT | BANDWIDTH INFORMATION OBTAINING |

TRANSMISSION RATE DETERMINING

TERMINAL CONTROL

1205          SENDING TERMINAL 121

# FIG. 13

# FIG. 14

start

receive control information packet from
receiving terminal A

receive propagation delay time measurement
packet of transmission path of
receiving terminal A

step
1401

determine transmission
rate Rm

$j = 1$

$$Q = \sum_{i=1}^{N} |R_m(i) - R_o(j,i)|$$

step
1402

Q < C — YES

NO

$j = j+1$

change receiving
terminal A to
group j

step
1403

step
1404

$j > M$ — NO

YES

step
1405

set receiving terminal A to new group

# FIG. 15

RECEIVING TERMINAL 151

TERMINAL CONTROL

DATA RECEIVING

CONTROL INFORMATION SENDING/ RECEIVING

PROPAGATION DELAY MEASUREMENT RESPONSE

~ data packet

~ control information packet

propagation delay time measurement packet

152

INTERMEDIATE NODE

153

INTERMEDIATE NODE

154

INTERMEDIATE NODE

DATA SENDING

TRANSMISSION RATE DETERMINING

CONTROL INFORMATION SENDING/ RECEIVING

PROPAGATION DELAY MEASUREMENT

TERMINAL CONTROL

1503

SENDING TERMINAL 150

# FIG. 16

```
        ┌─────────┐
        │  start  │
        └─────────┘
             │
             ▼
┌──────────────────────────────────┐
│ Rsnd=appropriate initial value   │
│ Tsnd=present time + Invl          │
└──────────────────────────────────┘
             │
             ▼
┌──────────────────────────────────┐
│ start sending data packets       │
│ (transmission rate Rsnd)         │
└──────────────────────────────────┘
             │
      ┌──────┤◄─────────────────────────────┐
      │      ▼                               │
      │    ╱────╲                            │
   NO │   ╱      ╲  present time ≧ Tsnd?     │
   ◄──┤  ╲      ╱                            │
      │   ╲────╱                             │
      │      │ YES                           │
      │      ▼                               │
      │ ┌──────────────┐                     │
      │ │ send control │                     │
      │ │ information  │                     │
      │ │ packet       │                     │
      │ └──────────────┘                     │
      │      │                               │
      │      ▼                               │
      │ ┌──────────────┐                     │
      │ │ send propagation                   │
      │ │ delay time   │                     │
      │ │ measurement packet                 │
      │ └──────────────┘                     │
      │      │                               │
      │      ▼                               │
      │    ╱────╲   control information      │
   NO │   ╱      ╲  packet received from     │
   ◄──┤  ╲      ╱  receiving terminal?       │
      │   ╲────╱                             │
      │      │ YES                           │
      │      ▼                               │
      │ ┌──────────────┐                     │
      │ │ record result of                   │
      │ │ measurement of                     │
      │ │ round trip time                    │
      │ └──────────────┘                     │
      │      │                               │
      │      ▼                               │
      │    ╱────╲   response to delay time   │
   NO │   ╱      ╲  measurement packet received
   ◄──┤  ╲      ╱  from intermediate node    │
      │   ╲────╱   (or receiving terminal)?  │
      │      │ YES                           │
      │      ▼                               │
      │ ┌──────────────────────┐             │
      │ │ calculate transmission rate        │
      │ │ (calculated result Rnew)           │
      │ └──────────────────────┘             │
      │      │                               │
      │      ▼                               │
      │ ┌──────────────┐                     │
      │ │ change       │                     │
      │ │ transmission rate                  │
      │ │ to Rnew      │                     │
      │ └──────────────┘                     │
      │      │                               │
      └──────┴───────────────────────────────┘
```

# FIG. 17

start

step 1700 $\left\{ \quad \boxed{R_{rcv} = (SEQ_{max} - SEQ'_{max}) \cdot P \cdot (1 - Loss)/Invl} \right.$

step 1701 $\left\{ \quad \boxed{B_{est} = R_{rcv} \cdot (RTT - RTT_{min})} \right.$

$$\boxed{\begin{array}{c} k=1 \\ n=0 \end{array}}$$

step 1702 $\left\{ \quad \boxed{\begin{array}{l} B_{total}(k) = R_{max}(k) \cdot (RTT(k) - RTT_{min}(k) \\ \quad - (RTT(k-1) - RTT_{min}(k-1))) \end{array}} \right.$

step 1703 $\left\{ \quad \diamond B_{total}(k) > threshold \quad \text{NO} \right.$

YES

$\boxed{n=n+1}$

$\boxed{k=k+1}$

$\diamond k > N \quad$ NO

YES

step 1704 $\left\{ \quad \boxed{B_{des} = B_{base} \cdot n} \right.$

step 1705 $\left\{ \quad \boxed{R_{new} = (B_{des} - B_{est})/Invl + R_{rcv}} \right.$

end

# FIG. 18

start

step 1800 {

Loss > 0

NO →

YES ↓

step 1801 { $R_{new} = (1-Loss) \cdot R'_{snd}$

determine transmission rate Rnew with transmission rate determining method shown in Fig. 3

} step 1802

end

# FIG. 19

# FIG. 20

SENDING
TERMINAL
1900

RECEIVING
TERMINAL
1910

TCPpacket
2000

TCP: bandwidth measurement packet
= Seq1 to Seq2 (Seq1<Seq2)

$\vdots$

RTP:Seq1$-$1

RTP:Seq1

RTP:Seq1$+$1

send packets
without interval
between the
packets
(RTPpackets2001)

RTP:Seq1$+$2

$\vdots$

RTP:Seq2

$\vdots$

RTP:Seq2$+$1

$\vdots$

TCP: estimation result Rb

TCPpacket
2002

# FIG. 21

RECEIVING TERMINAL 2110

2113

2114

| BANDWIDTH ESTIMATING | TERMINAL CONTROL |

2111

| DATA RECEIVING | ESTIMATION RESULTS SENDING |

2112

~ data packet

~ estimation results sending packet

2101

2102

| DATA SENDING | ESTIMATION RESULTS RECEIVING |

| BANDWIDTH ESTIMATION CONTROL | TERMINAL CONTROL |

2103

2104

SENDING TERMINAL 2100

# FIG. 22

SENDING
TERMINAL
2100

RECEIVING
TERMINAL
2110

⋮

RTP: bandwidth estimation flag OFF

RTP: bandwidth estimation flag ON

RTP: bandwidth estimation flag ON

send packets
without interval
between
packets
(RTPpackets2200)

⋮

RTP: bandwidth estimation flag ON

⋮

RTP: bandwidth estimation flag OFF

⋮

RTCP: estimation results Rb

(RTCPpacket
2201)

# FIG. 23

2301

SENDING
TERMINAL

2303

INTER-
MEDIATE
NODE

2304

INTER-
MEDIATE
NODE

2302

RECEIVING
TERMINAL

LINK
2305

LINK
2306

LINK
2307

# FIG. 24

```
                    ( start )
                        |
                        v
            +-----------------------+
            |        k=1            |
            | T=present time + Tp/N |
            +-----------------------+
                        |
      +---------------->|
      |                 v
      |     +--------------------------------------------+    } step
      |     | send packets of 46 sizes, from 32 bytes to 1472 |    2400
      |     | bytes at 32 byte intervals, to intermediate node |
      |     +--------------------------------------------+
      |                 |
      |                 v
      |     +--------------------------------------------+    } step
      |     | use method of least squares to calculate   |      2401
      |     |  α(k) and  β(k) such that t= α(k)+ β(k)s    |
      |     +--------------------------------------------+
      |                 |
      |                 v
```

$(|\alpha(k)-\alpha'(k)|<$threshold and $|\beta(k)-\beta'(k)|<$threshold) or T$<$present time

```
      |   +-------------+   NO      /\         } step
      |<--| α'(k)= α(k) |<---------/    \        2402
      |   | β'(k)= β(k) |          \    /
      |   +-------------+           \  /
      |                              \/
      |                              | YES
      |                              v
      |   +-------------+   NO      /\         } step
      |<--|   k=k-1     |<---------/    \        2403
      |   | T=T-Tp/N    |          \    /
      |   +-------------+           \  /
      |                              \/
```

$\beta(k)-\beta(k-1)>0$ or T$<$present time $-$ Tp/N

```
      |                              | YES
      |                              v
      |     +------------------------------+    } step
      |     | R(k)=1/( β(k)- β(k-1))        |      2404
      |     +------------------------------+
      |                 |
      |                 v
      |     +-----------------+
      |     |    k=k+1        |
      |     | T=T+Tp/N        |
      |     +-----------------+        } step
      |                 |                2405
      |                 v
      |      NO        /\
      +--------------/    \
                     \    /
                 k>N  \  /
                       \/
                        | YES
                        v
                    (  end  )
```

## FIG. 25

RECEIVING TERMINAL 251

TERMINAL CONTROL

| DATA RECEIVING | CONTROL INFORMATION SENDING/ RECEIVING | PROPAGATION DELAY MEASUREMENT RESPONSE | BANDWIDTH ESTIMATION RESPONSE |

~data packet  ~control information packet  ~propagation delay time measurement packet  ~bandwidth estimation packet

2502

BANDWIDTH CONTROL

INTER-MEDIATE NODE 252

INTERMEDIATE NODE

INTERMEDIATE NODE

2501

| BANDWIDTH RESERVATION | DATA SENDING | CONTROL INFORMATION SENDING/ RECEIVING | PROPAGATION DELAY MEASUREMENT | BANDWIDTH INFORMATION OBTAINING |

TRANSMISSION RATE DETERMINING

TERMINAL CONTROL

SENDING TERMINAL 250

# FIG. 26

SENDING
TERMINAL
250

INTERMEDIATE
NODE
(GATEWAY)
252

RECEIVING
TERMINAL
251

notification of largest
transmission rate and
smallest transmission rate
} step
2601

results of bandwidth
reservation
} step
2602

data(RTP)

⋮

× ×

change
transmission rate
(smallest
 transmission rate)

⋮

} step
2603

# FIG. 27

# EP 1 235 392 A1

<table>
<tr><td colspan="2" align="center"><strong>INTERNATIONAL SEARCH REPORT</strong></td><td>International application No.<br>PCT/JP01/06959</td></tr>
</table>

| A. CLASSIFICATION OF SUBJECT MATTER |
|---|
| Int.Cl⁷ H04L 12/56 |

According to International Patent Classification (IPC) or to both national classification and IPC

| B. FIELDS SEARCHED |
|---|
| Minimum documentation searched (classification system followed by classification symbols)<br> Int.Cl⁷ H04L 12/56, H04L 12/28, H04L 12/66 |

Documentation searched other than minimum documentation to the extent that such documents are included in the fields searched

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | JP 9-18514 A (Nippon Telegr. & Teleph. Corp. <NTT>), 17 January, 1997 (17.01.97), Par. Nos. [0004] to [0006]; Figs. 6, 7 & WO 97/02685 A1 & EP 785652 A1 & US 5878029 A | 1,2,11,13-19 |
| Y | | 4-9 |
| A | | 3,10,12 |
| X | JP 7-183886 A (NEC Corporation), 21 July, 1995 (21.07.95), Claim 1; Fig. 3 & EP 661851 A2 & US 5719853 A & CA 2138695 C | 10,16-19 |
| X | JP 10-13463 A (NEC Communication System, Ltd.), 16 January, 1998 (16.01.98), Claims 1, 2; Fig. 3 (Family: none) | 12,16-19 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br> 26 October, 2001 (26.10.01) | Date of mailing of the international search report<br> 16 November, 2001 (16.11.01) |
|---|---|
| Name and mailing address of the ISA/<br> Japanese Patent Office | Authorized officer |
| Facsimile No. | Telephone No. |

Form PCT/ISA/210 (second sheet) (July 1992)

45

## INTERNATIONAL SEARCH REPORT

| | International application No. |
|---|---|
| | PCT/JP01/06959 |

C (Continuation).   DOCUMENTS CONSIDERED TO BE RELEVANT

| Category* | Citation of document, with indication, where appropriate, of the relevant passages | Relevant to claim No. |
|---|---|---|
| Y | Kazutaka YAMAMOTO et al., "Kouiki Musen Tsuushin Media Riyou-ji no Gateway Kyouchou ni yoru TCP no Seinou Kaizen", Joho Shori Gakkai Kenkyu Houkoku, Vol.99, No.4, pages 91 to 96, Multimedia Tsuushin to Bunsan Shori 91-16, 99-DPS-91, Shadan Houjin Jouhou Shori Gakkai, 22 January, 1999 (22.01.99), (CS-NG-2000-00910-013), outline | 4,5 |
| Y | JP 6-338918 A (NEC Corporation), 06 December, 1994 (06.12.94), Claim 1; Fig. 2 & EP 609654 A2       & US 5636212 A & CA 2112756 C       & DE 69425766 E | 6-8 |
| Y | JP 2000-151692 A (NEC Corporation), 30 May, 2000 (30.05.00), Claim 1   (Family: none) | 6,8,9 |
| A | Hide YAMAGUCHI, "UNIX Communication Notes 118 Network Kanri (2)", UNIX MAGAZINE, Vol. 13, No. 4, pages 13-21, Kabushiki Kaisha Ascii, 01 April, 1998 (01.04.98), (CS-ND-1998-00120-001) Full text | 1-11,13-19 |
| A | Chinatsu IKEDA et al., "ATM-kou ni okeru Best Effort Class no Fukusou Seigyo Houshiki no Hyoujun-ka Doukou to sono Seinou Hikaku ", Denshi Joho Tsuushin Gakkai Gijutsu Kenkyu Houkoku, Vol.94, No.29, pages 15 to 20, IN94-41, Shadan Houjin Denshi Joho Tsuushin Gakkai, 13 May, 1994 (13.05.94), (CS-NG-1998-00939-003) page 17, left column, line 1 to page 19, left column, line 9; Figs. 1, 2 | 1-11,13-19 |

Form PCT/ISA/210 (continuation of second sheet) (July 1992)

**EP 1 235 392 A1**

<table>
<tr><td>**INTERNATIONAL SEARCH REPORT**</td><td>International application No.<br><br>PCT/JP01/06959</td></tr>
</table>

**Box I   Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II   Observations where unity of invention is lacking (Continuation of item 2 of first sheet)**

This International Searching Authority found multiple inventions in this international application, as follows:

   Claims 1-10, 13, 14, 16-19 relate to an invention of determining a transmission rate from a transmitting terminal based on the transmitting/receiving status of an intermediate node.
   Claims 11, 15 relate to an invention of transmitting a measurement result or data transmission rate changing request to a transmitting terminal based on a receiving condition at a receiving terminal of a packet from a transmitting terminal.
   Claim 12 relates to an invention of preferentially transmitting a packet having information on data transmission/reception control at a traffic congestion.
   The above inventions are not considered to be one invention only or a group of inventions so linked as to form a single general inventive concept.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐ The additional search fees were accompanied by the applicant's protest.
   ☒ No protest accompanied the payment of additional search fees.

Form PCT/ISA/210 (continuation of first sheet (1)) (July 1992)